# EUROPEAN PATENT APPLICATION

(11) **EP 2 060 495 A1**
(43) Date of publication of application: **20.05.2009**
(21) Application number: 07807288.1
(22) Date of filing: 13.09.2007
(51) Int. Cl.: B65B 35/56, B65B 5/06, B65B 35/40, B65G 47/248

(54) **CONVEYANCE DEVICE, AND BOX PACKING DEVICE AND BOX PACKING SYSTEM WITH THE SAME**

(30) Priority: 15.09.2006 JP 2006250547; 03.10.2006 JP 2006272078
(71) Applicant: ISHIDA CO., Ltd., Kyoto-shi, Kyoto 606-8392 (JP)
(72) Inventor: YOKOTA, Yuji, Ritto-shi Shiga 520-3026 (JP); TAKAYAMA, Motoki, Ritto-shi Shiga 520-3026 (JP); IWASA, Seisaku, Ritto-shi Shiga 520-3026 (JP)
(74) Representative: Skone James, Robert Edmund
(86) International application number: PCT/JP2007/067881
(87) International publication number: WO 2008/032801

(57) **Abstract**

Provided is a conveying device capable of changing the orientation of articles to be packed in a box with respect to an opening portion of a cardboard box and a boxing device provided therewith. A boxing device (100) changes a delivery interval (CL) when a product (X) is delivered from a paddle (122) to a bucket (141, 142), according to a desired accumulated state (flatly disposed form, partially overlappingly disposed form, longitudinally disposed form).

## Description

### TECHNICAL FIELD

The present invention relates to a conveying device that is mounted in a boxing device, for example, and configured to receive and convey a plurality of articles while aligning the same, and a boxing device and a boxing system provided with the same.

### BACKGROUND ART

Conventionally, an inspection device such as a seal checker that inspects bags for defective sealing, a conveying device that longitudinally arranges a plurality of conforming bags that underwent inspection and thereafter packs these bags in a cardboard box, and other devices have been used in the production line including a combination weighing device and a bag manufacturing and packaging apparatus. In recent years, it has been desired to pack articles in a box in a highly condensed manner as much as possible in order to reduce the distribution cost and the like. As a device to achieve this, for example, patent document 1 discloses a boxing device that forms a group of articles by horizontally aligning the articles in the standing position and pushes the group of articles into a box by vertically changing a push-in position with respect to a cardboard box whose opening portion is horizontally oriented. With this device, multiple rows and multiple layers of articles can be packed in a box in a fast and reliable manner. In addition, as a system that gathers and aligns articles in a three-dimensional manner and packs these articles in a cardboard box or the like, patent document 2 is known. Note that, here, an array in the horizontal direction (depth direction) is referred to as "row" and an array in the vertical direction is referred to as "layer" when the opening portion of the cardboard box is disposed so as to be horizontally oriented.
<Patent Document 1> JP-A Publication No. 2004-155428
<Patent Document 2> JP-A Publication No. 2004-75174

### DISCLOSURE OF THE INVENTION

### <OBJECT TO BE ACHIEVED BY THE INVENTION>

However, the above described conventional boxing devices have the following problems.

Specifically, with the above described conventional boxing devices that pack articles in a certain orientation (longitudinally direction) with respect to the cardboard box, the articles cannot be packed into the space that is created in the box depending on the sizes of the cardboard box and the articles, if, for example, it is the space where the articles can only be packed in the widthwise direction with respect to the cardboard box but not in the longitudinally direction. In addition, in such box packing, the filling efficiency of the articles packed in the box will drop if the position of an array of articles is disturbed during conveyance or if the position of the array of articles is not aligned.

An object of the present invention is to provide a conveying device capable of changing the orientation of the articles to be packed in a box with respect to an opening portion of a cardboard box and a boxing device provided with the same, so that the articles can be packed even in the space as described above. In addition, another object is to improve the filling efficiency of box packing by conveying an array of articles while preventing disturbance of the array of articles and aligning the position of the array of articles during conveyance of the array of articles to be packed in the box.

### <MEANS TO ACHIEVE THE OBJECT>

A conveying device according to a first aspect of the present invention is a conveying device that receives articles one by one from outside, accumulates the articles so as to form a batch of articles, and conveys the batch. The conveying device includes a delivery unit, a placing unit, and a control unit. The delivery unit receives the articles and thereafter turns and assumes a standing position thereby raising the articles, and also delivers the articles to the downstream side at a delivery position. The articles delivered from the delivery unit are sequentially placed on the placing unit, and the placing unit forms a batch of articles in an accumulated form. The control unit changes a delivery interval in which the delivery unit sequentially delivers the articles to the placing unit that moves in the conveying direction, according to a desired accumulated form.

Here, the control unit changes and controls the delivery interval in which the delivery unit sequentially delivers the articles to the placing unit that moves in the conveying direction, thereby changing the accumulated form of the batch of articles (a group of products to be aligned).

Note that, the "delivery interval" used herein refers to the distance in the conveying direction between an upstream end of the article in the conveying direction placed on one of the adjacent placing units whichever is on the downstream side and a delivery position where the articles are delivered from the delivery unit to the placing units. In addition, desired accumulated forms include, for example: a form in which the articles whose each largest-area surface is oriented in a generally vertical direction are arranged front and back in the conveying direction, i.e., a flatly disposed form in which the articles are accumulated in the most stable state with respect to the placing unit that moves in the conveying direction; a partially overlappingly disposed form (so-called a sashimi form) in which the articles adjacent to each other in the conveying direction are arranged front and back in the conveying direction such that they partially overlap with each other; a longitudinally disposed form which is similar to the above described partially overlappingly disposed form but in which the articles are accumulated such that they are arranged front and back in the conveying direction in the standing potion.

With the conventional boxing device, for example, a batch of articles is formed by horizontally aligning a plurality of articles in the standing position. Then, the batch of articles is pushed into a box by vertically changing a push-in position with respect to a cardboard box whose opening portion is oriented in the horizontal direction. However, as for the direction of arrangement of the group of articles, the articles can always be aligned only in the same direction. Thus, also for box packing, the articles had to be packed only in the same direction.

Therefore, with the conveying device of the present invention, the control unit changes the delivery interval in which the delivery unit sequentially delivers the articles to the placing unit that moves in the conveying direction.

Accordingly, it is possible to align the articles that are received one by one from the outside in different positions according to the delivery interval and to change the accumulated form of the batch of the articles. For example, when a sufficient delivery interval is secured, the article delivered to the placing unit at the delivery position will be inverted from the standing position assumed at the time of delivery and will lie in the flatly disposed state. Thus, it is possible to form the accumulated form as in the flatly disposed form. In addition, for example, when the delivery interval is not sufficient, the article delivered to the placing unit at the delivery position will lean on the article that was placed on the placing unit immediately previously. Thus, it is possible to maintain the standing position assumed at the time of delivery. In this case, it is possible to form the longitudinally disposed form in which the articles are accumulated such that they are arranged front and back in the conveying direction in the standing potion.

As a result, by controlling the delivery interval, a desired accumulated form can be formed. For example, a batch of articles having a different accumulated form that is formed as described above is pushed into vertically different positions at the opening portion of the cardboard box, and thereby the orientation of the articles to be packed in the box can be changed with respect to the opening portion of the cardboard box.

A conveying device according to a second aspect of the present invention is the conveying device according to the first aspect of the present invention, further including a conveying unit that transfers the placing unit in the conveying direction. Additionally, the control unit changes the delivery interval by controlling a conveying distance of the conveying unit.

Here, for example, with respect to the delivery unit that turns at a constant speed, the control unit controls the conveying distance of the conveying unit that transfers the placing unit which receives the articles. Specifically, the conveying distance of the conveying unit is controlled such that the delivery interval according to the accumulated form can be ensured by the moving distance of the placing unit in the conveying direction from a point where the placing unit receives the article to a point where the placing unit receives the next article.

Accordingly, it is possible to ensure the delivery interval according to the accumulated form.

A conveying device according to a third aspect of the present invention is the conveying device according to the first or second aspect of the present invention, wherein the control unit changes the delivery interval by controlling the turning speed of the delivery unit.

Here, for example, with respect to the placing unit that moves in the conveying direction at a constant speed, the control unit controls the turning speed of the delivery unit that delivers the articles. Specifically, the turning speed of the delivery unit is controlled such that the delivery interval according to the accumulated form can be ensured by the moving distance of the placing unit in the conveying direction from a point where the delivery unit delivers the article to the placing unit to a point where the delivery unit delivers the next article.

Accordingly, it is possible to ensure the delivery interval according to the accumulated form.

A conveying device according to a fourth aspect of the present invention is the conveying device according to any one of the first through third aspects of the present invention, wherein the delivery interval is equal to or greater than the length of the article in the conveying direction in a state in which the article in the standing position tipped over in the conveying direction.

Here, the delivery interval to achieve the accumulation form as in the flatly disposed form is set to be equal to or greater than the length of the article in the conveying direction in a state in which the article in the standing position has been delivered to the placing unit and tipped over in the conveying direction.

Accordingly, the article delivered to the placing unit at the delivery position will not come into contact with the article that was placed immediately previously. Thus, as a result, a tipped-over state which is the most stable condition with respect to the placing unit that moves is achieved. In other words, a state is achieved in which the surface having the largest area is oriented generally in the vertical direction. Accordingly, it is possible to form the accumulated form as in the flatly disposed form in which the articles that have been inverted from the standing position assumed at the time of delivery and are lying in the flatly disposed state and are arranged front and back.

Note that, at this time, it does not matter whether or not the longitudinal direction of the article is oriented in the conveying direction or in the direction orthogonal to the conveying direction.

Further, the articles delivered one by one from the delivery unit can be accumulated in the flatly disposed state and pushed into the cardboard box. Thus, for example, in a state in which the opening portion of the cardboard box is oriented in the horizontal direction, it is possible to pack the articles in a horizontal manner with the largest-area surface of each article is oriented in a generally vertical direction.

A conveying device according to a fifth aspect of the present invention is the conveying device according to any one of the first through third aspect of the present invention, wherein the delivery interval is shorter than the length of the article in the conveying direction in a state in which the article in the standing position tipped over in the conveying direction.

Here, the delivery interval to achieve the accumulation form as in the partially overlappingly disposed form or the longitudinally disposed form is set to be shorter than the length of the article in the conveying direction in a state in which the article in the standing position tipped over in the conveying direction.

Accordingly, the article delivered from the delivery unit at the delivery position will tip over in the conveying direction but not to a degree where the article will be in the aforementioned flatly disposed state. The article will be held in a state in which the article partially overlaps with the immediately previous article. Consequently, it is possible to form the accumulated form as in the partially overlappingly disposed form (so-called a sashimi form) in which the article and the immediately previous article are arranged front and back in a partially mutually overlapped state and the accumulated form as in the longitudinally disposed form in which the articles are held in the hardly tipped-over a state.

Further, the articles delivered one by one from the delivery unit can be accumulated in the partially overlappingly disposed form and longitudinally disposed form, and pushed into the cardboard box. Thus, it is possible to pack in the partially overlappingly disposed form and the longitudinally disposed form, for example, in a state in which the opening portion of the cardboard box is oriented in the horizontal direction.

A conveying device according to a sixth aspect of the present invention is the conveying device according to the fourth or fifth aspect of the present invention, wherein the control unit has an adjustment function to adjust the delivery interval in a predetermined delivery interval range.

Here, a variation of the accumulated forms is increased by providing the adjustment function to adjust the delivery interval in the predetermined delivery interval range.

Accordingly, for example, in the flatly disposed form, the delivery interval is changed in a range in which the delivery interval is greater than the length of the article in the conveying direction in a state in which the article in the standing position tipped over in the conveying direction. Thereby the amount of distance between the articles arranged front and back in the flatly disposed form can be adjusted.

In addition, for example, in the partially overlappingly disposed form, the delivery interval is changed in a range in which the delivery interval is shorter than the length of the article in the conveying direction in a state in which the article in the standing position tipped over in the conveying direction. Thereby the amount of overlap between the articles arranged front and back can be adjusted. For example, when the amount of overlap is adjusted to almost zero, the article delivered from the delivery unit at the delivery position will lean on the immediately previous article without losing the balance. Thus, it is possible to align the articles in the standing position as is. The standing position is a state held when the articles are delivered from the delivery unit. Consequently, it is possible to form the accumulated form as in the longitudinally disposed form in which the articles in the standing position assumed at the time of delivery are arranged front and back.

A conveying device according to a seventh aspect of the present invention is the conveying device according to any one of the first through sixth aspects of the present invention, wherein an angle of the delivery unit at the delivery position with respect to the horizontal direction is approximately 90 degrees.

Here, the angle of the delivery unit at the delivery position with respect to the horizontal direction is approximately 90 degrees. In other words, the angle of the delivery unit at the time of delivery from the delivery unit to the placing unit with respect to the horizontal direction is approximately 90 degrees.

Accordingly, the article will reliably move away from the delivery unit, and thus the article can be reliably delivered.

A boxing system according to an eighth aspect of the present invention includes a conveying device and a packing unit. The conveying device is the conveying device according to any one of the first through seventh aspects of the present invention. The packing unit transfers the article conveyed from the conveying device into the box.

Here, with the boxing device equipped with the above described conveying device, the batch of articles aligned on the conveying surface is packed in the box by a push-in member such as, for example, a cross feed mechanism or the like.

Accordingly, the batch of articles aligned in a desired accumulated form can be fed into the box. Thus, it is possible to change the orientation of the articles to be packed in the box with respect to the opening portion of the cardboard box.

A boxing system according to a ninth aspect of the present invention is a boxing system that packs a plurality of articles in a box, with each article being constituted by contents in a bag formed by a pair of lateral sides and a bottom portion continuous with the lateral sides, the boxing system including: a conveying surface that supports from below the bottom portion of an array of articles in which the plurality of articles are linearly arranged in a manner that the lateral sides of the plurality of article are in contact with one another; a pusher that pushes forward a rear end adjacent to the lateral side of the array of articles and thereby conveys the array of articles on the conveying surface; a pair of guiding plates that guides the array of articles by coming into contact with the lateral sides at both ends of the array of articles in a width direction orthogonal to the conveying direction, the array of articles being conveyed on the conveying surface; and a correction unit that prevents some of the articles from protruding forward from the array of articles, wherein the correction unit includes a bar capable of coming into contact with a front end of the array of articles opposite from the rear end, a pair of arms that continuous with an end of the bar and rotates around the horizontal axis line, and a first drive unit that drives and rotates the arm such that the arm moves between a contact position where the bar comes into contact with the front end of the array of articles and a retreat position where the bar does not interfere with the conveyance of the array of articles.

Note that, the term "forward" used herein refers to the conveying direction of the array of articles in the boxing system, and the array of articles is pushed out by the pusher to the downstream side in the conveying direction

According to the above aspect, the bar is rotated to the contact position, thereby preventing some of the articles from protruding forward from the array of articles and preventing the array of articles from being disturbed. Therefore, even when the array of articles is an array of irregular bag-shaped articles, it can be conveyed and thus can be packed in the box.

A boxing system according to a tenth aspect of the present invention is the boxing system according to the ninth aspect of the present invention, preferably further including a support portion that supports at least one of the guiding plates in a freely movable manner in a width direction such that the distance between the pair of guiding plates changes, and a second drive unit that moves the guiding plates in the width direction.

According to the above aspect, the pitch between the articles in the array of articles can be reduced, thus increasing the filling efficiency of box packing.

A boxing system according to an eleventh aspect of the present invention is the boxing system according to the tenth aspect of the present invention, wherein each guiding plate preferably has a circular arc silt formed thereon in order to allow the bar to rotate along the trajectory in which the bar rotates with the arms.

According to the above aspect, each guiding plate can be provided also at a portion where the bar is disposed, so that the array of articles can be reliably guided.

In addition, both guiding plates can be brought closer to each other in a state in which the bar is in contact with the bag, so that the alignment of the array of articles is not easily disturbed.

A boxing system according to a twelfth aspect of the present invention is the boxing system according to any one of the ninth through eleventh aspects of the present invention, wherein the position of the bar at the retreat position is preferably below the conveying surface.

According to the above aspect, the bar does not interfere with the movement (conveyance) of the bag, so that the conveyance of the array of articles becomes smooth.

In addition, the bar is retreated downward but not upward, so that the pusher that conveys the array of articles can be disposed in the upper portion. Moreover, it is possible to convey the articles while causing the bar to retreat, so that it is possible to reduce the process time.

A boxing system according to a thirteenth aspect of the present invention is the boxing system according to any one of the ninth through twelfth aspects of the present invention, wherein the contact position of the bar can preferably be set to an arbitrary position.

According to the above aspect, the contact position of the bar is set to an arbitrary position, and thereby the boxing system can handle the articles in various sizes of bags.

A boxing system according to a fourteenth aspect of the present invention is the boxing system according to any one of the ninth through thirteenth aspects of the present invention, wherein, preferably, a portion of the conveying surface is provided rotatably around a horizontal axis line so as to form a rotation plate, and the rotation plate rotates the array of articles 90 degrees around the horizontal axis so as to change the position such that the front end of the array of articles becomes a lower end.

According to the above aspect, the position of the array of articles can be selectively changed by rotating the rotation plate. In this way, because the position of the array of articles can be changed, diversification of box packing forms can be achieved.

A boxing system according to a fifteenth aspect of the present invention is a boxing system that packs a plurality of articles in a box, with each article being constituted by contents in a bag formed by a pair of lateral sides and a bottom portion continuous with the lateral sides, the boxing system including: a conveying surface that supports from below the bottom portion of an array of articles in which the plurality of articles are linearly arranged in a manner that the lateral sides of the plurality of article are in contact with one another; a pusher that pushes forward a rear end adjacent to the lateral side of the array of articles and thereby conveys the array of articles on the conveying surface; a pair of guiding plates that guides the array of articles by coming into contact with the lateral sides at both ends of the array of articles in a width direction orthogonal to the conveying direction, the array of articles being conveyed on the conveying surface; and a rotation plate formed as a result of a portion of the conveying surface being provided rotatably around a horizontal axis line, and configured to rotate the array of articles 90 degrees around the horizontal axis so as to change the position such that a front end of the array of articles becomes a lower end.

According to the above aspect, the position of the array of articles can be selectively changed. Thus, diversification of box packing forms of the articles can be achieved.

A boxing system according to a sixteenth aspect of the present invention is the boxing system according to the fourteenth or fifteenth aspect of the present invention, preferably further including a shutter provided downstream of the rotation plate so as to support from below the array of articles and to cause the array of article being supported to drop downward as the shutter is opened.

According to the above aspect, when the array of articles drops as the shutter is opened, the articles are synchronized with each other and drop. Thus, the alignment of the array of articles is not easily disturbed.

A boxing system according to a seventeenth aspect of the present invention is the boxing system according to the sixteenth aspect of the present invention, wherein, preferably, an ascending and descending table that receives the array of articles that is dropped when the shutter is opened is provided below the shutter, and after receiving the array of articles, the ascending and descending table descends by the height corresponding to the height of the relevant array of articles.

According to the above aspect, a plurality of arrays of articles can be stacked and superposed to each other.

### <EFFECTS OF THE INVENTION>

With the conveying device according to the present invention and the boxing device provided therewith, it is possible to change the orientation of the articles to be packed in the box with respect to the cardboard box. In addition, it is possible to prevent some of the articles from protruding forward from the array of articles, and thus disturbance of the array of articles can be prevented. Therefore, even when the array of articles is a line of irregular bag-shaped articles, it can be conveyed and thus can be packed in the box.

### BRIEF DESCRIPTION OF THE DRAWINGS

Figure 1 is a lateral view showing an internal structure of a boxing device according to a first embodiment of the present invention.
Figure 2 is a lateral view showing the boxing device in Figure 1.
Figure 3 is a schematic view showing a conveying path of products in the boxing device in Figure 1.
Figure 4 is a lateral view showing a conveying mechanism included in the boxing device in Figure 1 and the delivery interval.
Figure 5 is a lateral view showing the structure of a boxing mechanism included in the boxing device in Figure 1.
Figure 6 is a view showing the delivery interval of the products when the products are accumulated in a longitudinally disposed form.
Figure 7 is a lateral view showing the conveying mechanism included in the boxing device in Figure 1 and the delivery interval.
Figure 8 is a view showing the delivery interval of the products when the products are accumulated in a flatly disposed form.
Figure 9 is a view showing the amount of distance between the products when the products are accumulated in the flatly disposed form.
Figure 10 is a lateral view showing the conveying mechanism included in the boxing device in Figure 1 and the delivery interval.
Figure 11 is a view showing the delivery interval of the products when the products are accumulated in a partially overlappingly disposed form (sashimi form).
Figure 12 is a view showing the amount of distance between the products when the products are accumulated in the partially overlappingly disposed form.
Figure 13 is an elevation view showing an example of a method of packing in a cardboard box.
Figure 14 is a view showing a trajectory of buckets included in the boxing device in Figure 1 and the movement of the products at the time of delivery.
Figure 15 is a schematic lateral view showing a boxing system according to a second embodiment of the present invention.
Figure 16 is a process chart showing a process in which articles are accumulated and packed in a box.
Figures 17(a) and (b) are schematic lateral views showing a conveying device included in the boxing system in Figure 15.
Figures 18(a) and (b) are schematic lateral views showing the conveying device included in the boxing system in Figure 15.
Figure 19 is a schematic perspective view showing an extendable conveyor and a delivery device included in the boxing system in Figure 15.
Figure 20 is a schematic perspective view showing the extendable conveyor and the delivery device included in the boxing system in Figure 15.
Figure 21 is a schematic elevation view showing an accumulation device included in the boxing system in Figure 15.
Figure 22 is a schematic elevation view showing the delivery device included in the boxing system in Figure 15.
Figure 23 is a schematic plan view showing an alignment device included in the boxing system in Figure 15.
Figure 24 is a schematic elevation view showing the alignment device included in the boxing system in Figure 15.
Figures 25(a) to (d) are operation views showing a method of accumulating the articles by the alignment device shown in Figure 24.
Figure 26 is a schematic plan view showing the conveying device and the accumulation device included in the boxing system in Figure 15.
Figures 27(a) and (b) are schematic perspective views showing the method of conveying an array of articles.
Figures 28(a) and (b) are schematic perspective views showing the method of conveying the array of articles.
Figure 29 is a schematic lateral view showing an article line conveying device in the vicinity of the conveying surface.
Figures 30(a) and (b) are schematic lateral views showing a method of conveying the array of articles.
Figure 31 (a) is a schematic lateral view showing a method of conveying the array of articles, and Figure 31 (b) is a chart showing the contents of memory in a stopper angle memory unit.
Figures 32(a) and (b) are schematic lateral views showing the operation of a rotation plate.

### DESCRIPTION OF THE REFERENCE SYMBOLS

- 100: boxing device
- 110: conveying device
- 111: take-in conveyor
- 112,113: side conveyor
- 120: delivery mechanism
- 121: support plate
- 122: paddle (delivery unit)
- 122a: rotation axis
- 123: rotation axis
- 130: boxing mechanism
- 140: conveying mechanism (conveying device)
- 141, 142: buckets (placing unit)
- 141a, 142a: bottom plate
- 141b, 142b: partition plate
- 143, 144: conveying chains (conveying unit)
- 145, 146: rotation axis
- 147, 148: drive unit
- 149: control unit
- 150: discharge mechanism (packing unit)
- 151: first cross feed mechanism
- 152: second cross feed mechanism
- 153: lifting mechanism
- 200: conveyor
- 201: guide
- X, X1, X2: product (article)
- Q: delivery position
- R: discharge position
- CL, CL1,CL2, CL3: delivery interval
- t1, t2, t3: length in the conveying direction
- S1, S2: amount of distance
- L1, L2: amount of overlap
- 5: boxing system
- 61: ascending and descending pusher (pusher)
- 65: conveying surface
- 66: rotation plate
- 80, 80A: guiding plates
- 81: support portion
- 82: slit
- 9: correction unit
- 91: bar
- 92: arms
- 93: first drive unit
- M: article
- Mf: front end
- Md: rear end
- PA: retreat position
- PT: contact position
- X: first direction (conveying direction)
- Y: second direction (width direction)

### BEST MODE FOR CARRYING OUT THE INVENTION

### (FIRST EMBODIMENT)

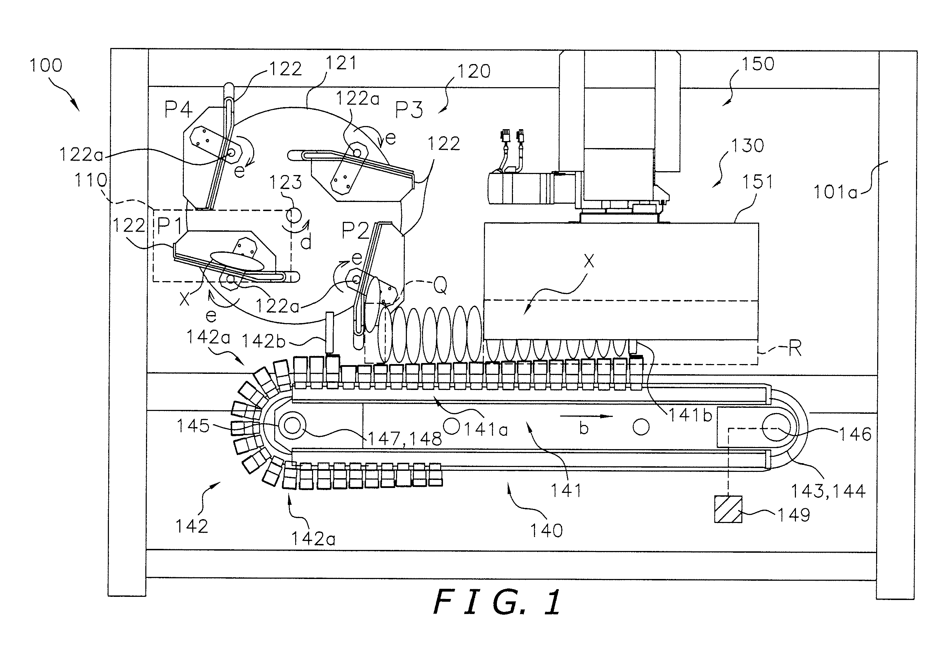

A boxing device 1 according to an embodiment of the present invention is described below with reference to Figures 1 to 14.

### <ENTIRE STRUCTURE OF BOXING DEVICE 100>

As shown in Figures 1 to 3, a boxing device 100 according to an embodiment of the present invention is a device that conveys a product (article) X that is a quadrangular bag formed by a soft packaging material in which snack foods are packed, and packs the product X in a cardboard box (box) Y. The boxing device 100 includes a conveying device 110, a delivery mechanism 120, and a boxing mechanism 130.

### <STRUCTURE OF CONVEYING DEVICE 110>

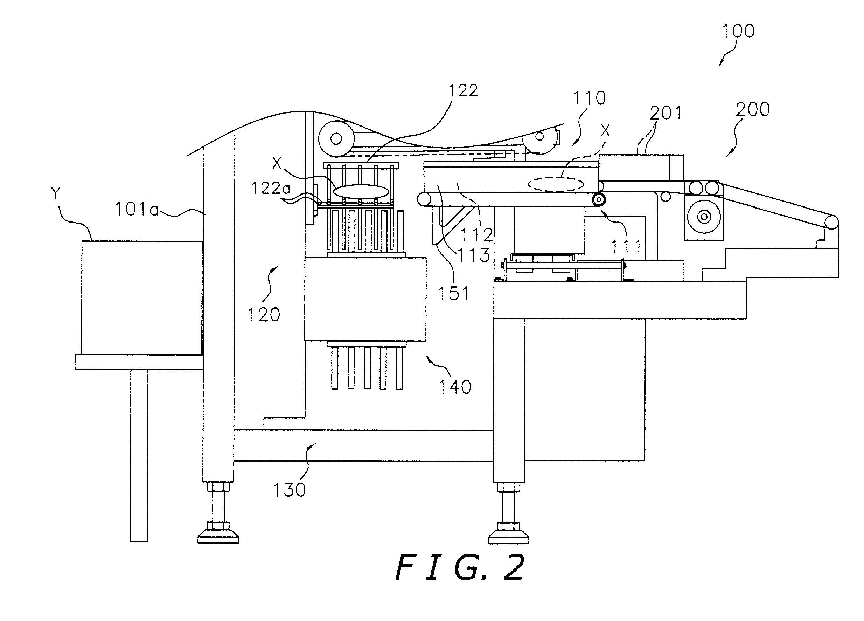

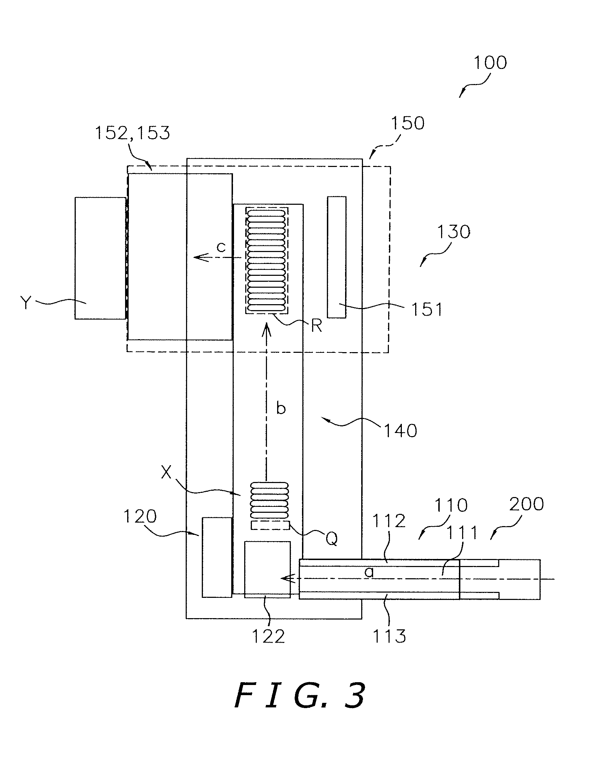

The conveying device 110 is disposed on the most upstream side of the boxing device 100. As shown in Figure 2, the conveying device 110 sequentially conveys the products X conveyed from the conveyor 200 on the upstream side to the downstream side along a conveying direction A (see Figure 3). Additionally, as shown in Figures 2 and 3, the conveying device 110 has a take-in conveyor 111 and a pair of side conveyors 112 and 113.

The take-in conveyor 111 is disposed on the most upstream side of the boxing device 100, and conveys the products X conveyed from a conveyor 200 on the upstream side to the downstream side along the conveying direction A.

Here, the conveyor 200 has guides 201 on each of the both ends thereof along the conveying direction A. Additionally, the conveyance speed of the conveyor 200 is set to be slower than the conveyance speed of the take-in conveyor 111. In addition, the conveying surface of the conveyor 200 on the upstream side has a lower frictional resistance than the conveying surface of the take-in conveyor 111 does, and thus can convey the products X slightly in a sliding manner on the conveying surface.

The pair of side conveyors 112 and 113 is disposed above the take-in conveyor 111 and in a generally inverted V shape when seen from the conveying direction A of the products X. In addition, the side conveyors 112 and 113 come into contact with the products X at both ends of the conveying surface of the take-in conveyor 111 in a direction intersecting the conveying direction A of the products X, and conveys the products X at a predetermined speed to the downstream side along the conveying direction A.

### <STRUCTURE OF DELIVERY MECHANISM 120>

As shown in Figure 3, the delivery mechanism 120 is disposed adjacent to the downstream side of the conveying device 110. The delivery mechanism 120 receives the products X conveyed from the conveying device 110 on the upstream side to the downstream side along the conveying direction A and sequentially aligns the products X in the standing position at a delivery position Q. Additionally, as shown in Figure 1, the delivery mechanism 120 includes a support plate 121 and four paddles (delivery units) 122.

As shown in Figure 1, the support plate 121 is attached to a lateral side of a main body case 1a on the downstream side of the conveying device 110 so as to generally face against the conveying direction A. The support plate 121 is a circular plate rotatably supported by a rotation axis 123 disposed in the center of the support plate 121.

The four paddles 122 are circularly disposed at the lateral side of the support plate 121 on the immediate downstream side of the conveying device 110, and each of them has a comb-teeth shaped placing surface. In addition, each of the paddles 122 has a rotation axis, and is rotatably attached to the support plate.

Here, the operation of the paddles 122 is more specifically described.

First, at a position P1 shown in Figure 1, each paddle 122 receives the product X in a generally horizontal state, which is conveyed from the conveying device 110 on the upstream side. At this time, the product X received is maintained in a state of being held on the comb-teeth shaped placing surface of the paddle 122 by a suction device (not shown).

Next, the support plate 121 rotates approximately 90 degrees in a rotation direction D about the rotation axis 123. During this time, the paddle 122 rotates approximately 90 degrees around the rotation axis 122a in a rotation direction E such that the product X is raised to the standing position, and moves to a position P2 shown in Figure 1. At this time, the angle of the paddle 122 at P2 (delivery position Q) with respect to the horizontal direction is approximately 90 degrees. Additionally, the paddle 122 conveys the product X in the standing position to the delivery position Q on the downstream side. At this time, either one of buckets (placing units) 141 and 142 (described in derail later) is disposed at the delivery position Q, and receives the product X in the standing position as is.

Further, during a time when the support plate 121 rotates from the position P2 shown in Figure 1 approximately 90 degrees about the rotation axis 123 in the rotation direction D, the paddles 122 rotates approximately 90 about a rotation axis 122a in a rotation direction E and moves to a position P3 shown in Figure 1. Similarly, the paddle 122 moves from the position P3 to a position P4.

Such operation is sequentially performed by the four paddles 122 disposed at the lateral side of the support plate 121, and thereby the products X conveyed from the conveying device 110 on the upstream side can be conveyed in the standing position to the delivery position Q on the downstream side.

### <STRUCTURE OF BOXING MECHANISM 130>

As shown in Figures 1 and 3, the boxing mechanism 130 is disposed adjacent to the downstream side of the delivery mechanism 120. At the delivery position Q, the boxing mechanism 130 aligns the products X delivered in the standing position from the delivery mechanism 120 on the upstream side so as to form a group of products X (hereinafter referred to as a batch of products X) accumulated in a desired form, and conveys the batch of products X to a discharge position R. Further, as described above, when the batch of products X is conveyed to the discharge position R, the boxing mechanism 130 discharges and packs the batch of products X, in the accumulated state as is, into the cardboard box Y set at the side of the discharge position R. Additionally, the boxing mechanism 130 includes a conveying mechanism (conveying device) 140 and a discharge mechanism (packing unit) 150.

### (STRUCTURE OF CONVEYING MECHANISM 140)

As shown in Figure 1, the conveying mechanism 140 is disposed adjacent to the downstream side of the delivery mechanism 120. Additionally, as shown in Figure 1, the conveying mechanism 140 includes conveying chains (conveying units) 143 and 144, the buckets 141 and 142, drive units 147 and 148, and a control unit 149. The conveying mechanism 140 sequentially receives the products X delivered in the standing position from the delivery mechanism 120 on the upstream side to the predetermined position Q, aligns a predetermined number of products X so as to form a batch of products X, and conveys the batch of products X to the discharge position R on the downstream side.

As shown in Figure 1, the conveying chains 143 and 144 independently rotate between a pair of rotation axis 145 and 146 respectively disposed on the upstream side and the downstream side of the conveying mechanism 140. Additionally, the conveying chains 143 and 144 convey the buckets 141 and 142 attached to the conveying chains 143 and 144 from the delivery position Q on the upstream side to the discharge position R on the downstream side.

As shown in Figure 1, the buckets 141 and 142 are respectively attached to the conveying chains 143 and 144, and independently run between the pair of rotation axis 145 and 146 respectively disposed on the upstream side and the downstream side of the conveying mechanism 140. In addition, the buckets 141 and 142 are respectively formed by a combination of a plurality of bottom plates 141a and a plurality of the bottom plates 142a. In order to hold the products X in the standing position on the buckets 141 and 142, the bottom plates 141a and 142a at the upstream ends are respectively provided with partition plates 141b and 142b.

The control unit 149 controls an intermittent conveyance timing (delivery interval) in which the buckets 141 and 142 receive the product X from the paddle 122 during intermittent conveyance of the buckets 141 and 142. In other words, the control unit 149 controls the conveying distance of the conveying chains 143 and 144 to which the buckets 141 and 142 are attached.

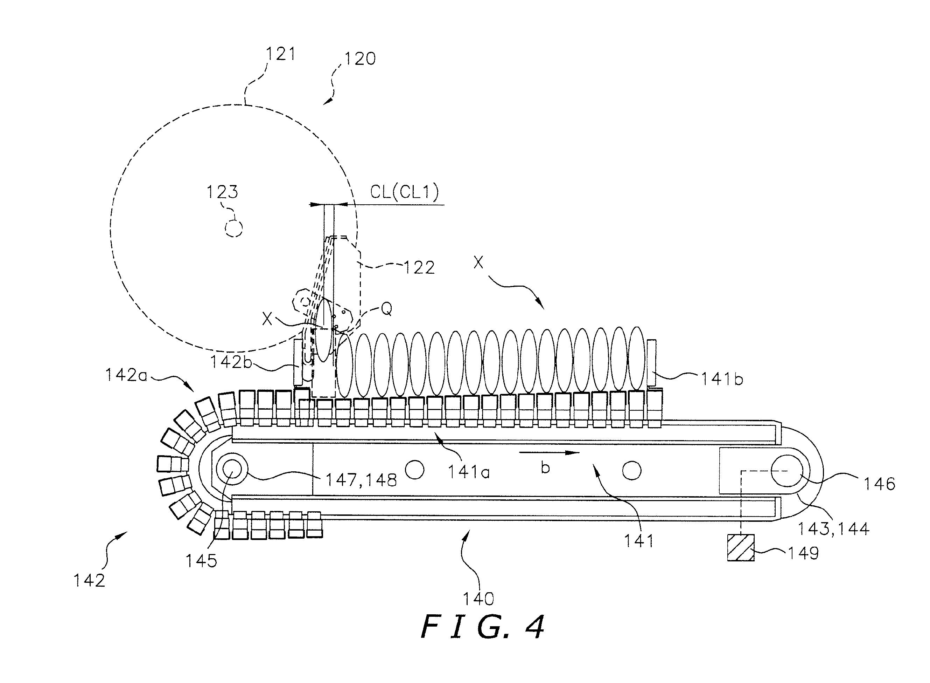

Here, the method of conveying the products X by the buckets 141 and 142 are more specifically described below with reference to Figures 1 and 4, taking the bucket 141 as an example.

When the products X are conveyed from the paddles 122 on the upstream side, as shown in Figure 4, the bucket 141 waiting on the downstream side moves to the downstream side by a predetermine distance (delivery interval) (hereinafter referred to as "delivery interval") CL, and the products X delivered from the paddles 122 are placed on the bucket 141. Note that, by changing the delivery interval CL, it is possible to change the alignment of the batch of the articles X, i.e., the accumulated form of the articles X. This will be described in detail later. Note that the below description describes a case where the products X are placed on the bucket 141 in a state in which the products X can be held in the standing position.

Next, when a predetermined number of products X delivered from the upstream side are placed on the bucket 141, the bucket 141 conveys the batch of products X in the standing position as is to the discharge position R on the downstream side along a conveying direction B. At this time, as shown in Figure 1, the bucket 142 that was waiting adjacently to the upstream side of the bucket 141 in the conveying direction B quickly moves to the downstream side, and sequentially receives the products X in the standing position from the paddles 122, as is the case with the above described bucket 141.

In addition, with the buckets 141 and 142, as shown in Figure 1, the plurality of bottom plates 141a and 142a are inclined at a predetermined angle from the upstream side to the downstream side, and the bottom plates 141a and 142a are disposed such that the bottom plates 141 a and 142a on the downstream side are higher than the bottom plates 141a and 142a on the upstream side when conveying the products X. Consequently, the downstream bottom plates 142a of the bucket 142 can be partially overlapped on the upstream bottom plates 141a of the bucket 141.

Accordingly, the bucket 142 can wait at a position closer to the delivery position Q. Thus, when the bucket 141 moves to the discharge position R on the downstream side, the bucket 142 can quickly move to the downstream side in the conveying direction B and receive the products X from the upstream side. Note that, similarly, the bucket 141 can also be partially overlapped on the upstream bottom plates 142a of the bucket 142.

Next, when the batch of products X placed in the standing position on the bucket 141 is discharged by the discharge mechanism 150 (described later), the bucket 141 moves further in the conveying direction B on the conveying mechanism 140. Additionally, when the bucket 141 moves to the downstream end of the conveying mechanism 140, the bucket 141 goes underneath the conveying mechanism 140, moves in a direction opposite to the conveying direction B, moves to the immediate upstream side of the buckets 142 in the conveying direction B, and waits there. Additionally, when the bucket 142 receives a predetermined number of products X from the upstream side and moves to the discharge position R, the bucket 141 quickly moves to the downstream side in the conveying direction B and sequentially receives a predetermined number of products X from the upstream side, in a similar manner as described above.

### <STRUCTURE OF DISCHARGE MECHANISM 150>

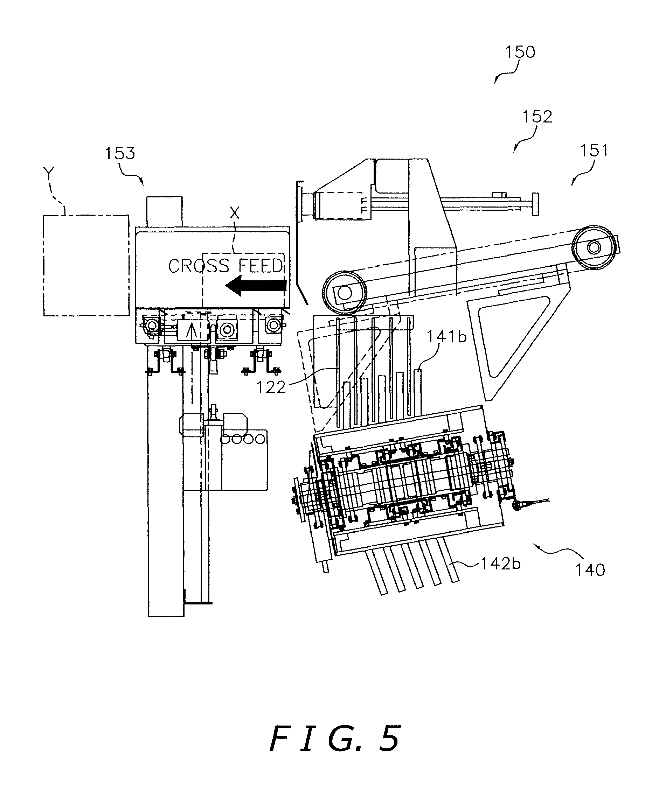

As shown in Figure 3, the discharge mechanism 150 is disposed adjacent to the downstream side of the conveying mechanism 140. The discharge mechanism 150 pushes the batch of products X being conveyed by the conveying mechanism 140 to the discharge position R and aligned in the standing position into the cardboard box Y by two-step cross feed conveyance. In addition, as shown in Figure 5, the discharge mechanism 150 includes a first cross feed mechanism 151, a second cross feed mechanism 152, and a lifting mechanism 153.

The batch of products X that was moved to the discharge position R by the above described conveying mechanism 140 is cross-fed in a direction indicated by arrow C shown in Figure 3 and conveyed onto the lifting mechanism 153 by the first cross feed mechanism 151.

As shown in Figure 5, the lifting mechanism 153 moves plurality of the batch of products X in a generally vertically direction that was cross-fed from the conveying mechanism 140 by the first cross feed mechanism 151 to a height position where the batch can be cross-fed by the second cross feed mechanism 152.

The second cross feed mechanism 152 is disposed on the upper row of the first cross feed mechanism 151. The second cross feed mechanism 152 pushes and packs the batch of products X lifted by the lifting mechanism 153 (described later) in the cardboard box Y.

The boxing device 100 in the present embodiment repeats the operation by the discharge mechanism 150 as described above while vertically changing the position for carrying the batch of products X into the cardboard box Y. Thereby, box packing in a state in which a plurality of batches of products are stored in layers can be achieved.

### <DESCRIPTION OF SWITCHING CONTROL OF DELIVERY INTERVAL CL>

Next, switching control of the delivery interval CL by the control unit 149 when the products X are delivered from the paddles 122 to the buckets 141 and 142 is described.

Note that, the delivery interval CL refers to a distance in the conveying direction between the upstream end of the product X in the conveying direction placed on one of the adjacent buckets 141 and 142 whichever is on the downstream side and the delivery position Q. The distances indicated by CL1, CL2, and CL3 in Figures 4, 7, and 10, respectively, are the delivery intervals CL.

With the boxing device 100 in the present embodiment, the control unit 149 controls the timing of intermittent conveyance in which the buckets 141 and 142 receive the products X from the paddles 122 during intermittent conveyance by the buckets 141 and 142. In other words, the delivery interval CL is changed by controlling the conveying distance of the conveying chains 143 and 144 to which the buckets 141 and 142 are attached.

Below, the relationship between the types of the accumulated forms (longitudinally disposed form, flatly disposed form, and partially overlappingly disposed form) and the delivery interval CL is described.

### (LONGITUDINALLY DISPOSED FORM)

As shown in Figure 4, the longitudinally disposed form is a state in which the products X that were received in the standing position from the paddle 22 are sequentially aligned in the standing position as is, and placed on the buckets 141 and 142.

With the boxing device 100 in the present embodiment, the delivery interval CL 1 for achieving the longitudinally disposed form is approximately half the length of the product X in the standing position in the conveying direction (CL1 = t1/2).

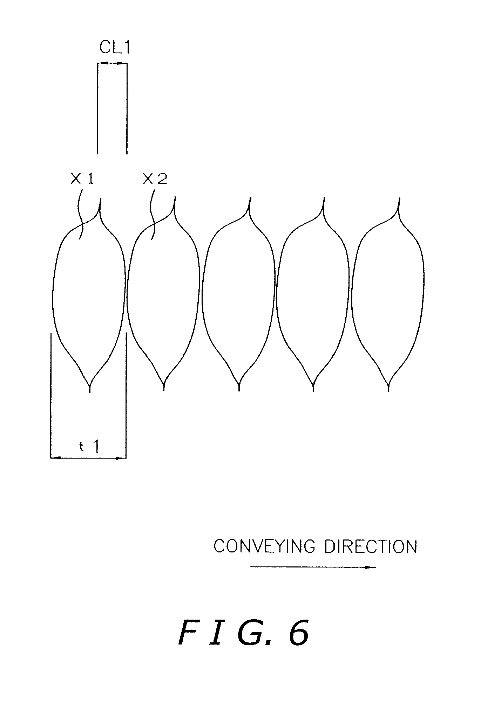

Note that, as in the present embodiment, when the product X has a shape formed by a soft packaging material in which snack foods are packed, the length of the product X in the standing position in the conveying direction indicates a thickness t1, as shown in Figure 6, where the thickness is the largest. In addition, here, CL1 is equal to t1/2 by definition of the delivery interval CL. The distance between the delivery position Q and the center of the product X in the conveying direction that was immediately previously delivered to the bucket 141 or 142 corresponds to the thickness t1 of the product X.

In such a case, as shown in Figure 6, a product X1 delivered from the paddle 122 at the delivery position Q will lean on an immediately previous product X2, in the standing position as is without losing its balance. Accordingly, it is possible to form the accumulated form as in the longitudinally disposed form in which the products X (X1, X2, ...) in the standing position assumed at the time of delivery are arranged front and back.

### (FLATLY DISPOSED FORM)

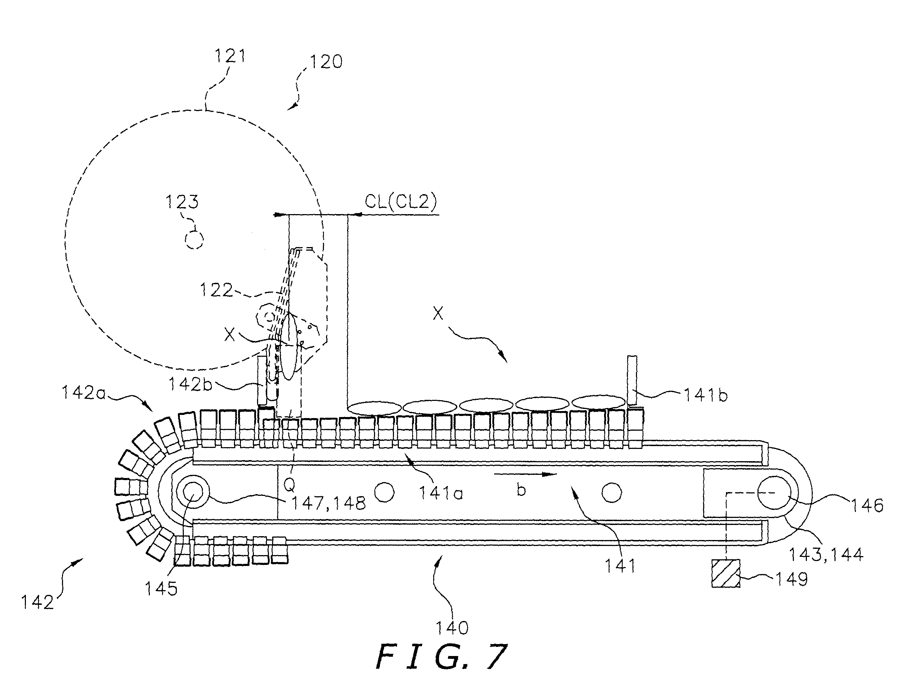

As shown in Figure 7, the flatly disposed form is a state in which the products X are arranged front and back in the conveying direction with the largest-area surface of each product X is oriented in a generally vertical direction, i.e., in a so-called flatly disposed state, and are placed on the buckets 141 and 142 in that state. Note that, at this time, it does not matter whether or not the longitudinal direction of the product X is oriented in the conveying direction or in the direction orthogonal to the conveying direction.

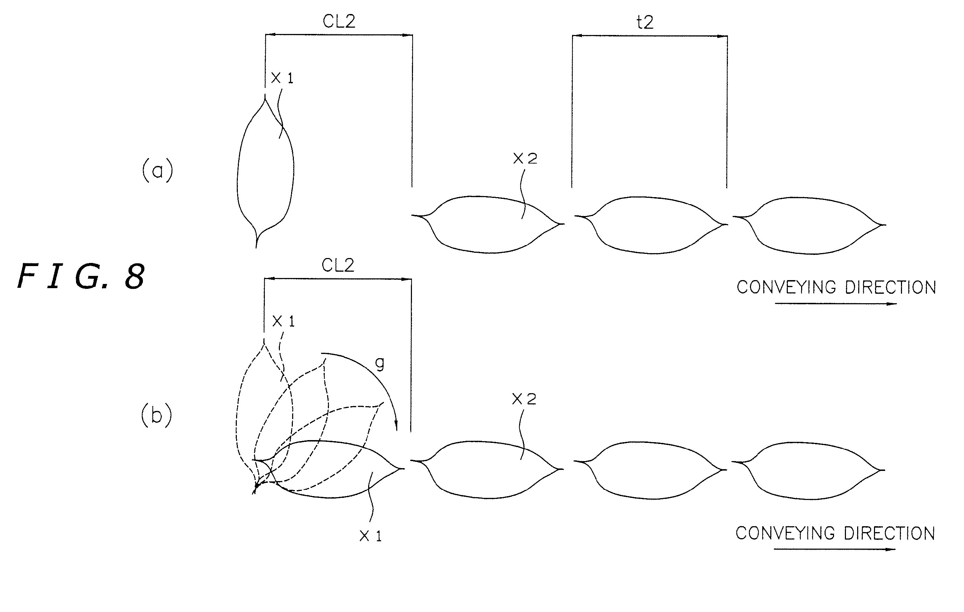

With the boxing device 100 in the present embodiment, the delivery interval CL2 to achieve the flatly disposed form is equal to or longer than a length t2 of the product X in the conveying direction (CL2 > = t2) in a state in which the product X in the standing position has been delivered to the bucket 141 or 142 and then tipped over. Note that, as in the present embodiment, when the product X has a shape formed by a soft packaging material in which snack foods are packed, the length of the product X in the tipped-over position in the conveying direction indicates the length t2 shown in Figure 8(a).

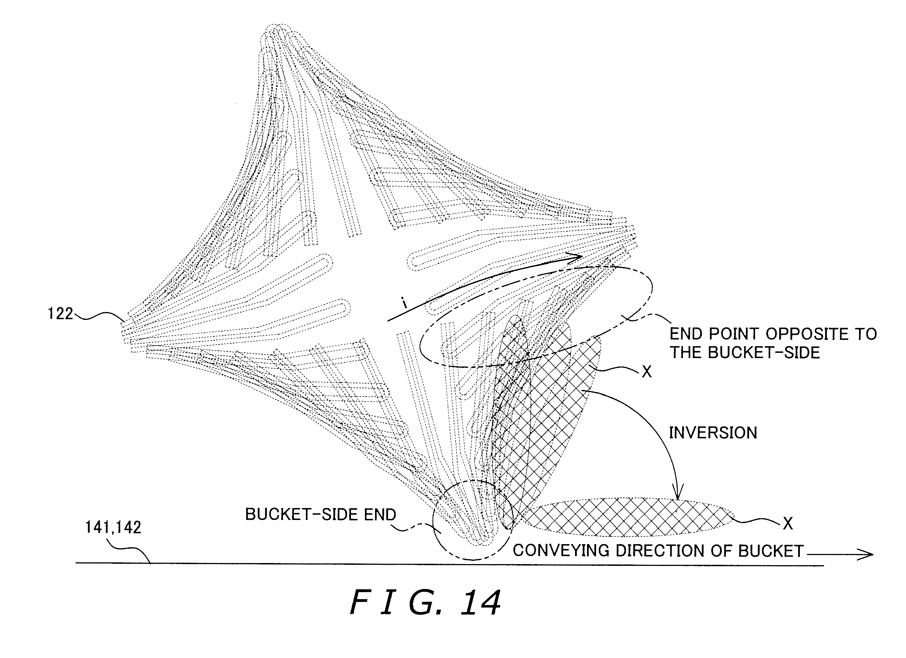

In such a case, as shown in Figure 8(b), the product X1 delivered from the paddle 122 at the delivery position Q will not come into contact with the product X2 that was placed immediately previously. Thus, as a result, the tipped-over state which is the most stable condition with respect to the buckets 141 and 142 that move is achieved. In addition, as shown in Figure 14, a bucket-side end point of the rotation trajectory of the paddles 122 on which the products X are placed hardly moves at the delivery position Q, and an end point opposite to the bucket-side moves in the moving direction of the bucket (direction I) and pushes out the products. Thus, the upper end side of each product X can be inverted in a stable manner with respect to the moving direction of the bucket. Accordingly, the products X in the standing position at the delivery position can form the accumulated form as in the flatly disposed form in which the products X (X1, X2, ...) inverted in a direction indicated by arrow G (see Figure 8(b)) and tipped over are arranged front and back.

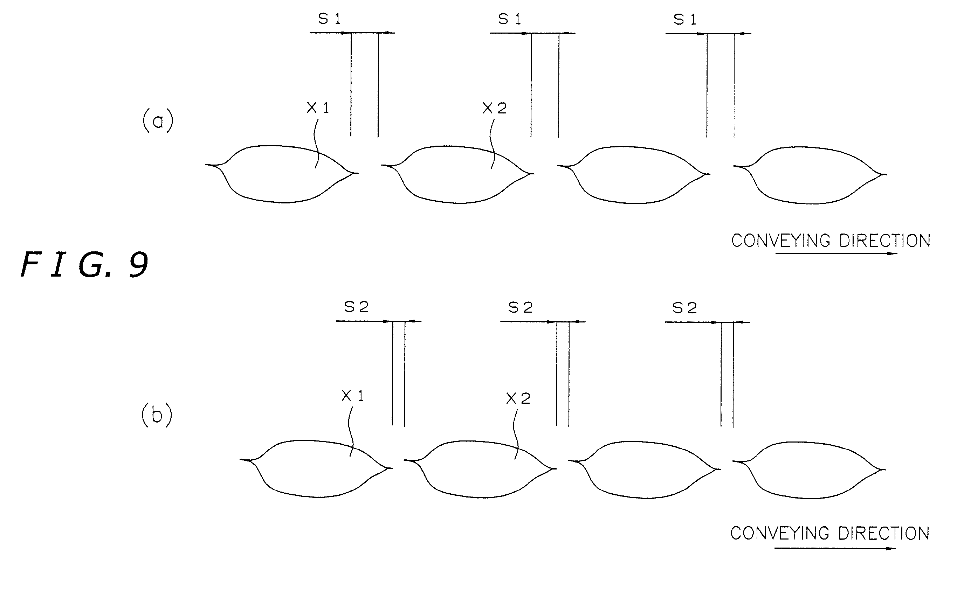

Further, with the boxing device 100 in the present embodiment, a variation of the accumulated forms is increased by adjusting the delivery interval CL in the range of the predetermined delivery interval CL2 shown above. In other words, it is possible to increase a variation of the flatly accumulated forms, for example, as shown in Figures 9(a) and (b), by adjusting amounts of distance S1 and S2 of the products X (X1, X2, ...) placed in the flatly disposed state.

### (PARTIALLY OVERLAPPINGLY DISPOSED FORM)

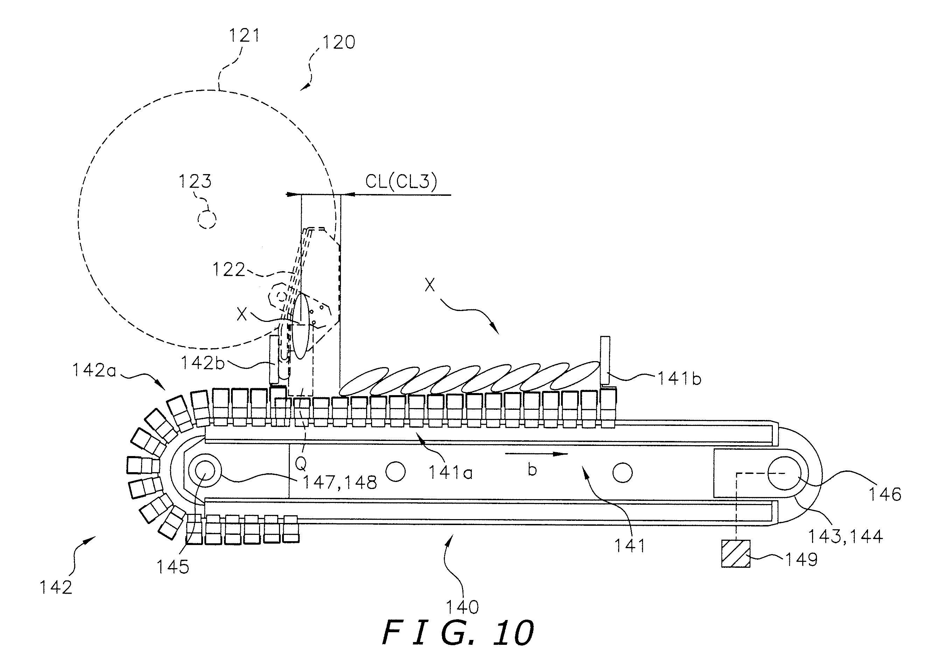

As shown in Figure 10, the partially overlappingly disposed form is a state in which the products X are accumulated in a form that the products X adjacent to each other in the conveying direction are arranged front and back in the conveying direction such that they partially overlap with each other. Note that, at this time, it does not matter whether or not the longitudinal direction is oriented in the conveying direction or in the direction orthogonal to the conveying direction.

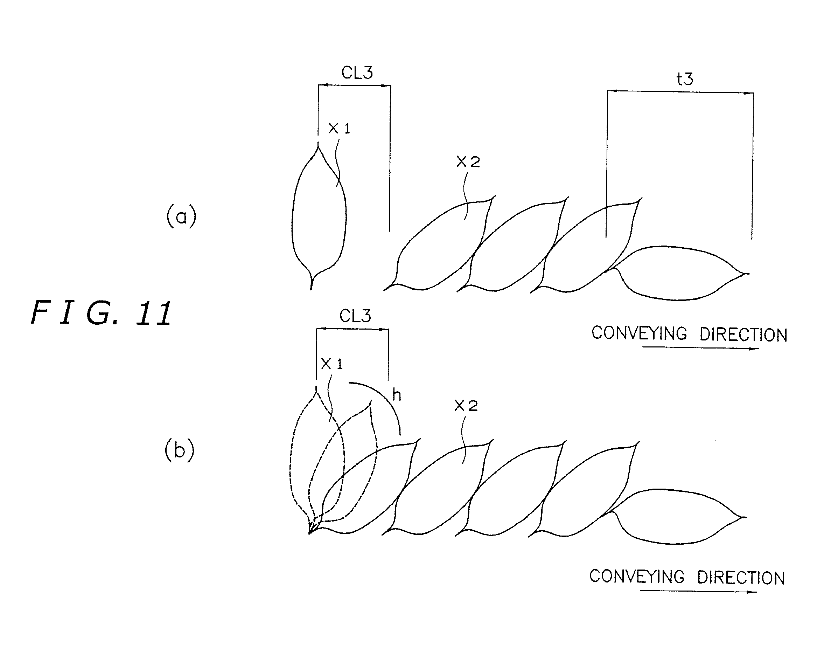

With the boxing device 100 in the present embodiment, the delivery interval CL3 to achieve the accumulation form as in the partially overlappingly disposed form is to be shorter than a length t3 of the product X in the conveying direction (CL3 < t3) in a state in which the products X in the standing position have been delivered to the buckets 141 and 142 and then tipped over in the conveying direction. Note that, as in the present embodiment, when the product X has a shape formed by a soft packaging material in which snack foods are packed, the length of the product X in the tipped-over position in the conveying direction indicates the length t3, as shown in Figure 11(a).

In such a case, the product X1 delivered from the paddle 122 at the delivery position Q will not come into contact with the product X2 that was immediately previously placed, and thus the product X1 will tip over in a direction indicated by arrow H (see Figure 11 (b)). However, as shown in Figure 11(b), the product X1 will not tip over to a degree where it will be in the aforementioned flatly disposed state, and the product X 1 will be in a state in which the product X 1 partially overlaps with the immediately previous product X2. In addition, as shown in Figure 14, the bucket-side end point of the rotation trajectory of the paddles 122 on which the products X are placed hardly moves at the delivery position Q, and the end point opposite to the bucket-side moves in the moving direction of the bucket (direction I) and pushes out the products. Thus, the upper end side of the product X can be inverted in a stable manner with respect to the moving direction of the bucket. Accordingly, the accumulated form as in the partially overlappingly disposed form can be formed in which the products X are arranged front and back such that the products X (X1, X2, ...) front and back partially overlap with each other.

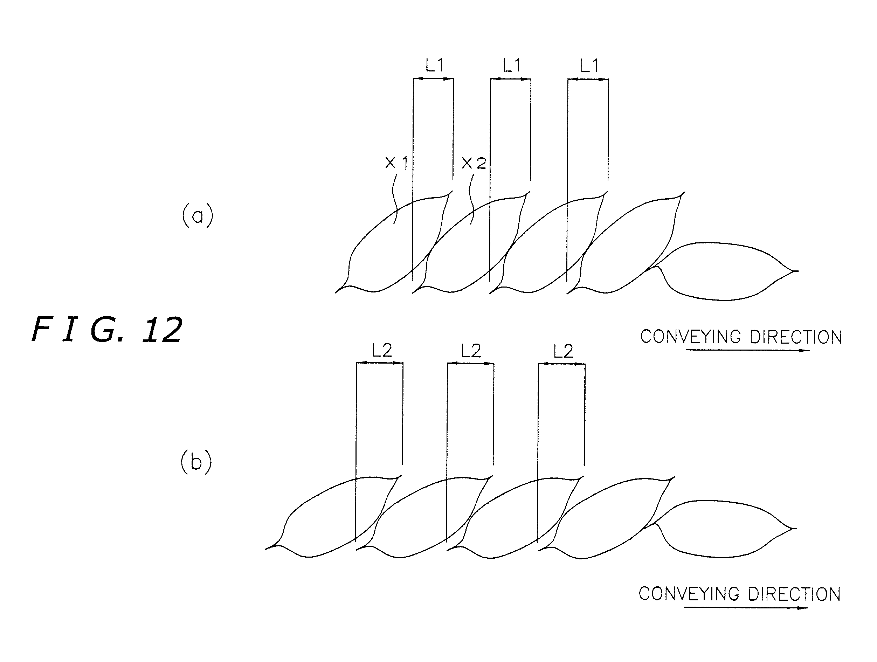

Further, with the boxing device 100 in the present embodiment, a variation of the accumulated forms is increased through various adjustments of the delivery interval CL in the range of the predetermined delivery interval CL3 shown above. In other words, it is possible to increase a variation of the partially overlappingly accumulated forms, for example, as shown in Figures 12(a) and (b), by adjusting amounts of overlap L1 and L2 of the products X (X1, X2, ...) placed in the partially overlappingly disposed state.

Note that, as in the boxing device 100 in the present embodiment, when the partition plates 141b and 142b are respectively provided at upstream ends of the buckets 141 and 142, it is possible to further increase a variation of accumulated method by controlling the distance between the partition plates 141b or 142b and the first product X (the leading product X in the conveying direction) to from the batch of the products X. Accordingly, for example, when achieving the partially overlappingly disposed form, as shown in Figure 10, it is possible to accumulate the products X such that the first product X to form the batch of products X leans on the partition plate 141b or 142b. Alternatively, it is possible to accumulate the batch of products X in a state in which the first product X completely tipped over as shown in Figures 11(a) and (b).

### <DESCRIPTION OF BOX PACKING BY DISCHARGE MECHANISM 150>

With the boxing device 100 in the present embodiment, as described above, the orientation of the products X to be packed in the box can be changed with respect to the opening portion of the cardboard box, through achievement of various accumulated forms by controlling the delivery interval by the conveying mechanism 140.

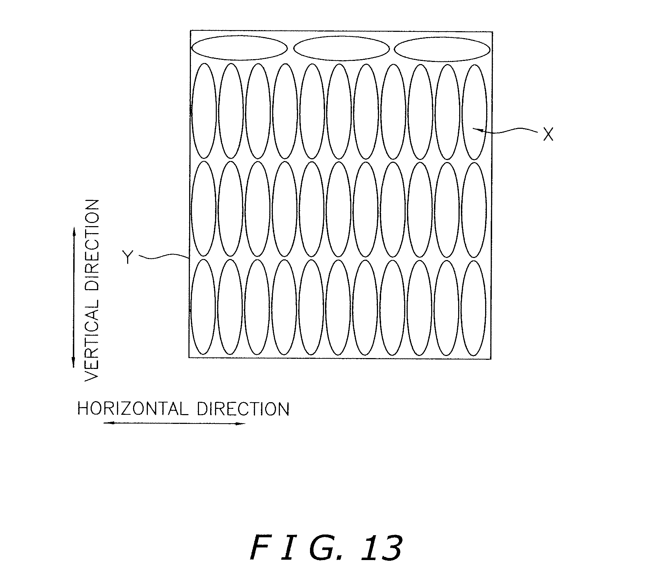

For example, the products X can be packed in the cardboard box Y by box packing as shown in Figure 13 in the following manner: the batch of products X accumulated in the longitudinally disposed form is packed in the box by the discharge mechanism 150; next, the batch of products X accumulated also in the longitudinally disposed form is packed in the box by the discharge mechanism 150; then the batch of products X accumulated in the flatly disposed form is packed in the box by the discharge mechanism 150.

### <CHARACTERISTICS OF BOXING DEVICE 100>

### (1)

As shown in Figures 4, 7, and 10, the boxing device 100 in the present embodiment changes the delivery interval CL at the time when the products X are delivered from the paddles 122 to the buckets 141 and 142, according to a desired accumulated state.

Accordingly, the products X that are received one by one from the outside can be aligned in different positions, and the accumulated form of the batch of products X can be changed among the flatly disposed form, the partially overlappingly disposed form, the longitudinally disposed form, and the like.

As a result, a desired accumulated form can be easily formed by changing the delivery interval CL, and the batch of products X formed as described above is pushed into the opening portion of the cardboard box Y. Thereby, it is possible to change the orientation of the products X to be packed in the box.

### (2)

With the boxing device 100 in the present embodiment, with respect to the paddles 122 that turn at a constant speed, the control unit 149 controls the conveying distance of the conveying chain 143 that transfers the buckets 141 and 142 which receive the products X. Specifically, the conveying distance of the conveying chain 143 is controlled such that the moving distance of the buckets 141 and 142 in the conveying direction B from a point where the product X is received from the paddle 122 to a point where the next product X is received will be the delivery interval CL according to the accumulated form (flatly disposed form, partially overlappingly disposed form, longitudinally disposed form).

This enables to secure the delivery interval CL (CL1, CL2, CL3) according to the accumulated form.

### (3)

With the boxing device 100 in the present embodiment, as shown in Figure 4, the delivery interval CL1 to achieve the longitudinally disposed form is approximately half the length of the product X in the standing position (CL1 = t1/2).

Accordingly, as shown in Figure 6, the product X1 delivered from the paddle 122 at the delivery position Q will lean on the immediately previous product X2, in the standing position as is without losing its balance. Accordingly, it is possible to form the accumulated form as in the longitudinally disposed form in which the products X (X1, X2, ...) in the standing position assumed at the time of delivery are arranged front and back.

As a result, it is possible to form the accumulated form as in the longitudinally disposed form in which the products X are arranged in a state in which the each product X is leaning on the immediately previous product and in the hardly tipped-over a state.

### (4)

With the boxing device 100 in the present embodiment, as shown in Figure 7, the delivery interval CL2 to achieve the flatly disposed form is set to be equal to or longer than the length t2 of the product X in the conveying direction (CL2 > = t2) in a state in which the product X in the standing position has been delivered to the buckets 141 and 142 and tipped over in the conveying direction.

Accordingly, as shown in Figure 8(b), the product X1 delivered from the paddle 122 at the delivery position Q will not come into contact with the product X2 that was placed immediately previously. Thus, as a result, the completely tipped-over state which is the most stable condition with respect to the buckets 141 and 142 that move is achieved. As a result, it is possible to form the accumulated form as in the flatly disposed form in which the products X that have been inverted from the standing position assumed at the time of delivery and lie in the flatly disposed state are arranged front and back.

### (5)

With the boxing device 100 in the present embodiment, as shown in Figure 10, the delivery interval CL3 to achieve the accumulation form as in the partially overlappingly disposed form is set to be shorter than the length t3 of the product X in the conveying direction (CL3 < t3) in a state in which the products X in the standing position have been delivered to the buckets 141 and 142 and then tipped over in the conveying direction.

Accordingly, the product X1 delivered from the paddle 122 at the delivery position Q will not come into contact with the product X2 that was placed immediately previously and thus the product X1 will tip over in a direction indicated by arrow H (see Figure 11(b)). However, as shown in Figure 11(b), the product X1 will not tip over to a degree where it will be in the aforementioned flatly disposed state, and the product X 1 will be in a state in which the product X 1 partially overlaps with the immediately previous product X2.

As a result, the accumulated form as in the partially overlappingly disposed form can be formed in which the products X are arranged front and back such that each product partially overlaps with the immediately previous article.

### (6)

With the boxing device 100 in the present embodiment, a variation of the accumulated forms for the flatly disposed form is increased by adjusting the delivery interval CL in the range of the delivery interval CL2 shown above. In other words, a variation of the flatly disposed accumulated form is increased, as shown in Figures 9(a) and (b), by adjusting amounts of distance S1 and S2 of the products X (X1, X2, ...) placed in the flatly disposed state.

In addition, a variation of the accumulated form for the partially overlappingly disposed form is increased by adjusting the delivery interval CL in the range of the delivery interval CL3 shown above. In other words, a variation of the partially overlapped accumulated form is increased, as shown in Figures 12(a) and (b), by adjusting amounts of overlap L1 and L2 of the products X (X1, X2, ...) placed in the partially overlappingly disposed form.

### (7)

With the boxing device 100 in the present embodiment, as shown in Figure 14, the bucket-side end point of the rotation trajectory of the paddles 122 on which the products X are placed hardly moves at the delivery position Q, and the end point opposite to the bucket-side moves in the moving direction of the bucket (direction I).

Accordingly, the paddles 122 push out the upper end side of the products X. Thus, the upper end side of each product X in the standing position can be inverted in a stable manner with respect to the moving direction of the buckets.

### (8)

With the boxing device 100 in the present embodiment, the paddle 122 rotates approximately 90 degrees around the rotation axis 122a in the rotation direction E such that the product X is raised to the standing position, and moves to the position P2 shown in Figure 1. At this time, the angle of the paddle 122 at P2 (delivery position Q) with respect to the horizontal direction is approximately 90 degrees.

Accordingly, the product X will reliably move away from the paddle 122, and thus the product X can be reliably delivered to the buckets 141 and 142.

### <OTHER EMBODIMENTS>

While only one embodiment of the present invention has been described, the scope of the invention is not limited to the above-described embodiment, and various changes and modifications can be made herein without departing from the scope of the invention.

### (A)

The boxing device 100 in the above embodiment is described with an example in which the delivery interval CL is changed by controlling the conveying distance of the conveying chains 143 and 144 to which the buckets 141 and 142 are attached. However, the present invention is not limited thereto.

For example, the delivery interval may be changed by controlling the turning speed of the support plate to which the paddles are attached. In other words, the delivery interval can be lengthened by slowing the turning speed with respect to the buckets that move at a constant speed; the delivery interval can be shortened by accelerating the turning speed.

In addition, instead of controlling either the conveyance speed of the buckets or the turning speed of the paddles to be constant, both speeds may be controlled to change the delivery interval.

### (B)

The boxing device 100 in the above embodiment is described with an example in which the products X are packed in box in a manner as shown in Figure 13 by combining accumulation methods of the flatly disposed form and the longitudinally disposed form. However, the present invention is not limited thereto.

For example, the products accumulated by one of the following manners may be packed in the box: by combining accumulation methods of the flatly disposed form, longitudinally disposed form, and partially overlappingly disposed form; by arbitrarily combining two accumulation methods; or by a single accumulation method.

### (C)

The boxing device 100 in the above embodiment is described with an example in which the boxing device 100 is constituted by the four paddles 122 and the two buckets 141 and 142. However, the present invention is not limited thereto.

For example, the structure of the boxing device may include three paddles and one bucket. The numbers of paddles and buckets are not limited to the numbers as in the structure of the present embodiment.

### (D)

The boxing device 100 in the above embodiment is described with an example in which the delivery position Q is fixed to the same position. In other words, the position for delivering the products X is fixed. However, the present invention is not limited thereto.

For example, the products may be delivered while the paddles are moving in the conveying direction of the buckets. In other words, the products may be delivered by moving the delivery position. Also in this case, as in the case of the boxing device 100 in the above embodiment, an effect can be obtained in which a desired accumulated form can be easily formed by changing the delivery interval.

### (E)

The boxing device 100 in the above embodiment is described in which the delivery interval CL is changed by controlling the conveying chains 143 and 144 to which the buckets 141 and 142 are attached. However, the present invention is not limited thereto.

For example, it may be a conveying unit such as a belt or the like to which the buckets are attached.

### (F)

The boxing device 100 in the above embodiment is described with an example in which the buckets 141 and 142 attached to the conveying chains 143 and 144 are used as the placing units that received the products X from the paddles 122. However, the present invention is not limited thereto.

For example, the upstream ends of the buckets as the placing units need not be provided with a partition plate. In addition, for example, the placing unit may be an endless belt or the like. Also in this case, as in the case of the boxing device 100 in the above embodiment, an effect can be obtained in which a desired accumulated form can be easily formed by changing the delivery interval.

### (SECOND EMBODIMENT)

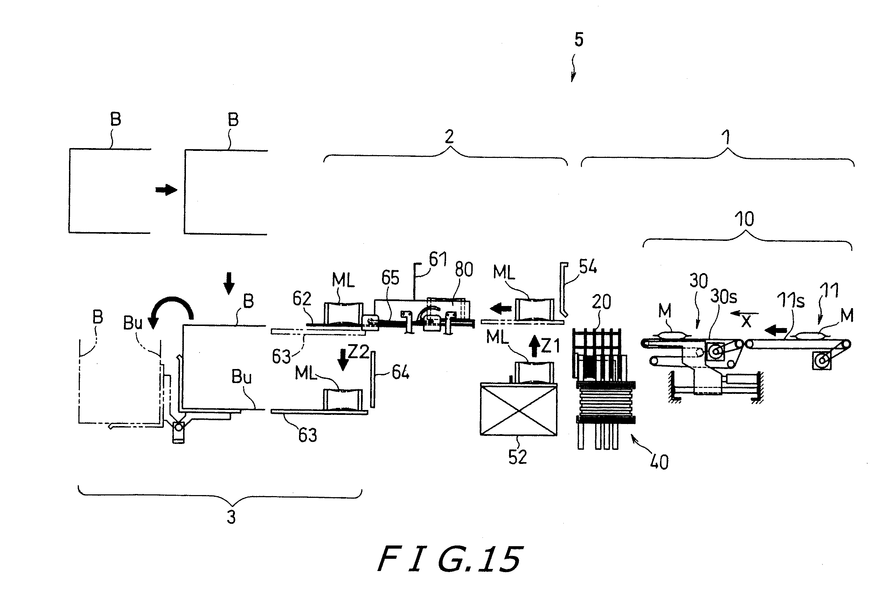

A boxing system 5 according to another embodiment of the present invention is described with reference to Figures 15 to 32.

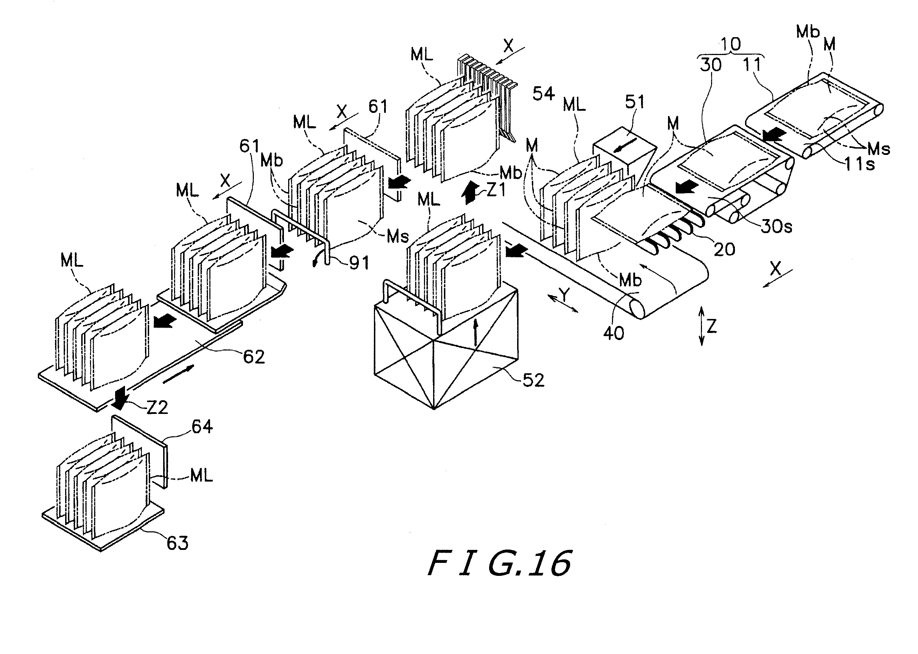

In the description below, as shown by two-dot chain line in Figure 16, an article M comprising a bag of potato chips, for example, which contains contents in a bag formed by a pair of lateral sides Ms and a bottom portion Mb continuous with the lateral sides Ms, is described as an example of an article. Note that, in the present invention, the bottom portion Mb is a portion continuous with the pair of lateral sides, which is supported by the conveying surface during conveyance of the article M in the standing position.

### <ENTIRE STRUCTURE OF BOXING SYSTEM 5>

Figure 15 shows the boxing system 5.

As shown in Figure 15, the boxing system 5 includes an accumulation device 1, an article line conveying device 2, and a box packing device 3. The accumulation device 1 includes a conveying device (an example of a conveying unit) 10, a delivery device (an example of a position changing unit) 20, and an alignment device (an example of an alignment unit) 40.

As shown in Figure 16, the article M conveyed in a horizontal position by the conveying device 10 is caused to change its position by the delivery device 20 from the horizontal position to the standing position. Then, the alignment device 40 gathers the articles M in an alignment in which the lateral sides Ms of each article M are in contact with each other, forming an array of articles ML.

Thereafter, the array of articles ML is pushed up by the article line conveying device 2 (Figure 15) in a vertically upward direction Z1, and then is conveyed to a shutter 62 in a first direction X. Then, after the above described conveyance, the shutter 62 is opened, and the array of articles ML is placed on an ascending and descending table 63 in an ascending state shown by two-dot chain line in Figure 15. Thereafter, the ascending and descending table 63 descends in a vertically downward direction Z2, and the array of articles ML is stacked and packed in a box B comprising a cardboard box or the like, for example, by a boxing pusher 64.

Next, the structure and operation of each component of the boxing system 5 are described.

### <CONVEYING DEVICE 10>

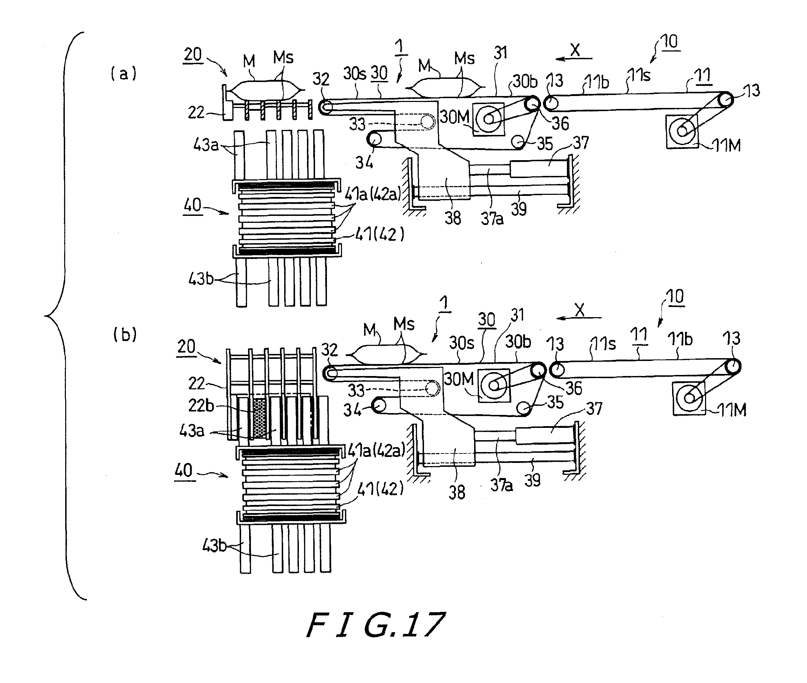

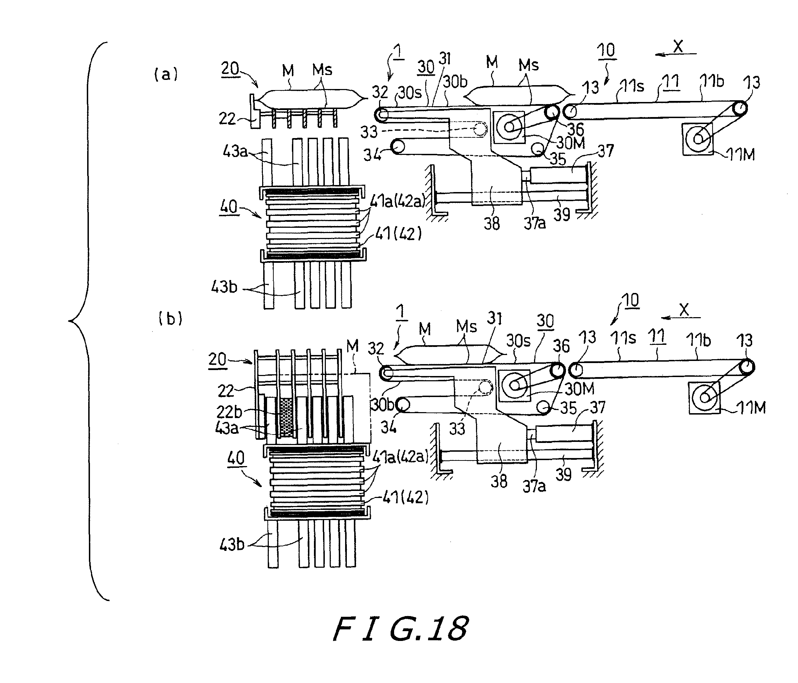

As shown in Figures 17 and 18, the conveying device 10 includes a feed conveyor 11 and an extendable conveyor 30. The article M conveyed from the upstream to the feed conveyor 11 is conveyed onto the extendable conveyor 30 from the feed conveyor 11. As shown in Figure 16, the article M is conveyed in the first direction X in the horizontal position in which one of the lateral sides Ms of the article M is supported from below by conveying surfaces 11s and 30s of the feed conveyor 11 and the extendable conveyor 30, respectively.

### <DELIVERY MECHANISM 20>

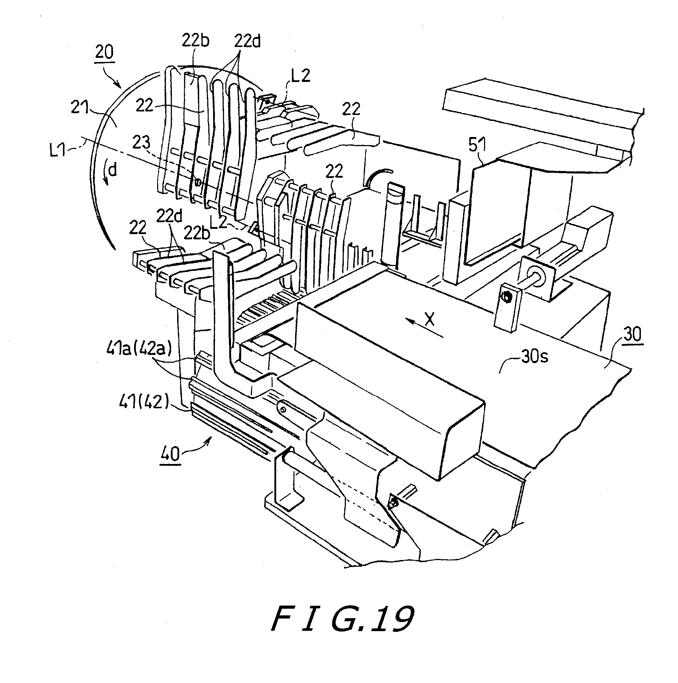

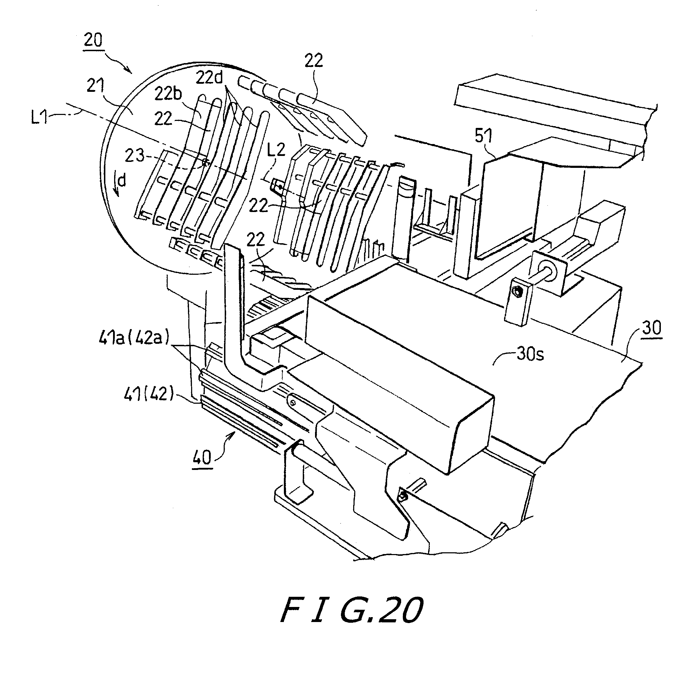

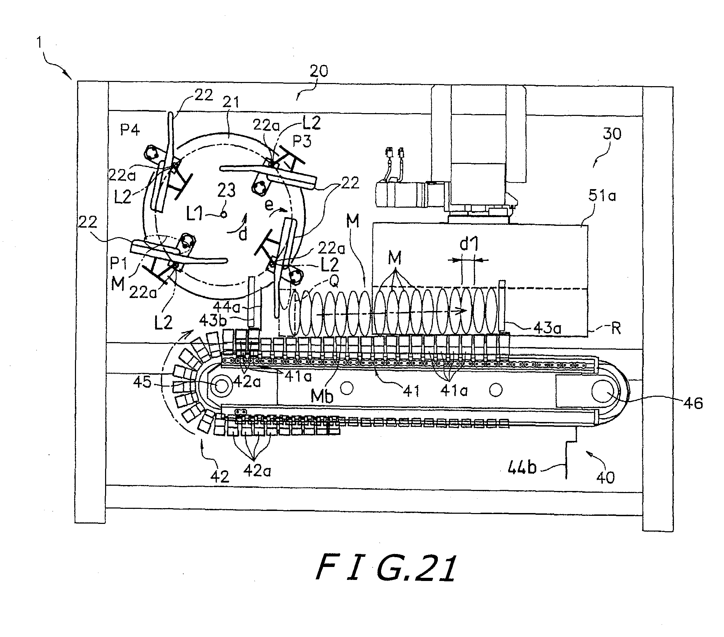

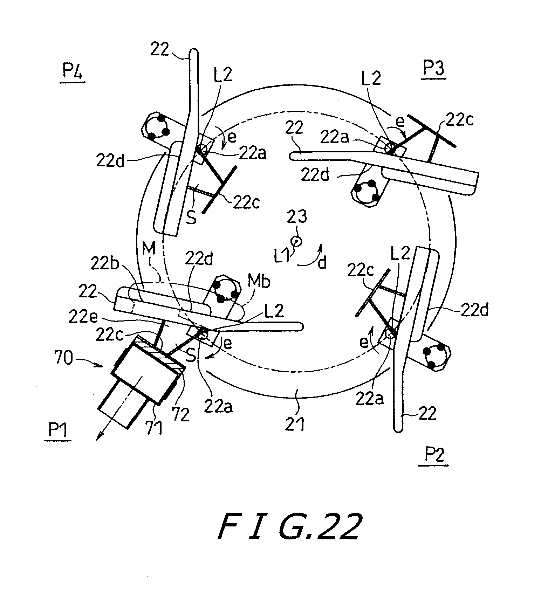

As shown in Figures 19 and 20, the delivery mechanism 20 is disposed immediately downstream of the extendable conveyor 30. The delivery mechanism 20 receives the articles M conveyed from the extendable conveyor 30 on the upstream side to the downstream side along the first direction X and sequentially aligns the articles M in the standing position at a predetermined position on the downstream side. As shown in Figure 21, the delivery mechanism 20 includes a support plate 21, four delivery tables 22, a rotation axis 23, and a suction device 70 (see Figure 22).

The support plate 21 is a generally circular plate rotatably supported by the rotation axis 23, and is disposed on the downstream side of the extendable conveyor 30 shown in Figures 19 and 20, along a surface of the extendable conveyor 30 orthogonal to the first direction X. The support plate 21 is rotated about the rotation axis 23 around a first axis line L1.

Each of the four delivery tables 22 is disposed on the same circle with respect to the surface of the generally circular support plate 21 on the immediate downstream side of the conveying device 10. Each delivery table 22 has a comb-teeth shaped placing surface 22d. Note that, a detailed structure and operation of the delivery tables 22 are described in detail later.

As shown in Figure 22, the rotation axis 23 is provided at the central portion of the generally circular support plate 21, and serves as the center of the circular trajectory of the four delivery tables 22. In addition, the rotation axis 23 moves the four delivery tables 22 at the acceleration greater than the gravitational acceleration g.

The suction device 70 is disposed in the vicinity of the position P1 on the circular trajectory of the four delivery tables 22. The suction device 70 comes into contact with a second opening portion 22c of the delivery tables 22 (described later) and sucks the article M placed on the delivery tables 22. Note that, the structure of the suction device 70 is also described in detail later.

### <DELIVERY TABLES 22>

Each delivery table 22 includes a rotation axis 22a that rotatably supports each delivery table 22, a first opening portion 22b (Figures 17(b) and 18(b)) that opens on the surface of the placing surface 22d for the article M excluding the comb-teeth shaped portion thereof, the second opening portion 22c that opens on the side opposite to the placing surface 22d for the article M, the placing surface 22d for the article M, and a chamber portion 22e that communicates between the first opening portion 22b and the second opening portion 22c.

Each rotation axis 22a is a rotation axis for changing the position of the delivery table 22, and is attached to the support plate 21. Each rotation axis 22a is set to be rotatable around a second axis line L2 parallel to the first axis line L1 in Figure 19. Each delivery table 22 rotates about the rotation axis 22a and thereby changes the position of the article M that the delivery table 22 received from the conveying device 10 (Figure 16) from the horizontal position to the standing position.

As shown in Figures 17(b) and 18(b), the first opening portion 22b is a plurality of circular holes formed on the surface of the placing surface 22d for the article M, which corresponds to the metal plate portion of the placing surface 22d of the delivery tables 22 excluding the comb-teeth shaped portion thereof. The first opening portion 22b sucks the article M against the placing surface 22d by a negative pressure generated in an internal space S (Figure 22) in the chamber portion 22e.

The second opening portion 22c shown in Figure 22 is formed by a plurality of circular holes formed at a leading end portion of the chamber portion 22e on the back side of the delivery table 22. Additionally, the second opening portion 22c comes into contact with an elastic member 72 of the suction device 70 (described later) at the position P1 when the delivery tables 22 rotates about the rotation axis 22a while moving along the circular trajectory centered on the rotation axis 23. At this time, the suction device 70 with which the second opening portion 22c coming into contact is sucking air by a vacuum pump (not shown), so that it is possible to generate a negative pressure, via the second opening portion 22c, for sucking the article M placed on the delivery tables 22 in the internal space S formed in the chamber portion 22e.

The placing surface 22d is a surface that comes into contact with the article M carried in from the conveying device 10 (Figure 16), and has the above described first opening portion 22b formed thereon.

### <OPERATION OF DELIVERY TABLES 22>

The delivery tables 22 rotationally moves about the rotation axis 23 along with the rotation of the support plate 21. At the position P1 shown in Figure 22, each delivery table 22 receives the article M, which is conveyed from the conveying device 10 on the upstream side, in the horizontal position in which the longitudinal direction of the article M is oriented in a generally horizontal direction (see Figure 16). At this time, the article M that the delivery table 22 received is held in a state in which the article M is sucked against the placing surface 22d of the delivery tables 22 by the suction device 70.

Next, the support plate 21 rotates approximately 90 degrees in the rotation direction D about the rotation axis 23, and the delivery table 22 moves from the position P1 to the position P2. During the movement to the position P2, the delivery table 22 rotates approximately 90 degrees in the rotation direction E about the rotation axis 22a such that the article M is raised to the standing position. Additionally, the delivery table 22 places the article M in the standing position at the predetermined position Q of the conveying mechanism 40 shown in Figure 21. Thereafter, the delivery table 22 moves so as to moves away upward while rotating in a direction indicated by arrow E about the rotation axis 23 in order to avoid contact with the article M. At this time, either one of buckets 41 and 42 (described in derail later) is stopped at the predetermined position Q, and receives and aligns the articles M in the standing position as is.

Further, the delivery tables 22 rotates approximately 90 degrees in the rotation direction E about the rotation axis 22a while the support plate 21 rotates approximately 90 degrees in the rotation direction D about the rotation axis 23 from the position P2 shown in Figure 22 and moves to the position P3. Similarly, the delivery table 22 moves from the position P3 to the position P4, and again moves to the position P1.

Such operation is sequentially performed by the four delivery tables 22 disposed at the lateral side of the support plate 21, and thereby it is possible to deliver a plurality of the articles M to the predetermined position Q in the standing position and form a batch of articles M.

### <SUCTION DEVICE 70>

As described above, the suction device 70 is a device for sucking the article M placed on the delivery table 22 against the delivery table 22, and includes a main body 71 and the elastic member 72.

The main body 71 is connected to the vacuum pump via an air pipe (not shown), and a negative pressure is formed in the internal space by the vacuum pump.

The elastic member 72 has an opening substantially as large as the second opening portion 22c of the delivery table 22. The elastic member 72 is disposed generally parallel to the tangential direction of the circular trajectory of the delivery tables 22 so as to come into contact with the second opening portion 22c of the delivery table 22 at the position P1 where each delivery table 22 receives the articles M from the conveying device 10.

Note that rubber products and resin products such as urethane foam can be used as the elastic member 72.

### <CONVEYING MECHANISM 40>

As shown in Figures 21, 23, and 24, the conveying mechanism 40 includes the plurality of buckets 41 and 42, partition plates 43a and 43b, back plates 44a and 44b, and drive motors M1 to M3. The conveying mechanism 40 sequentially receives the articles M conveyed in the standing position from the delivery mechanism 20 on the upstream side to the predetermined position Q in Figure 21, and conveys a predetermined number of articles M at a time to the discharge position R on the downstream side.

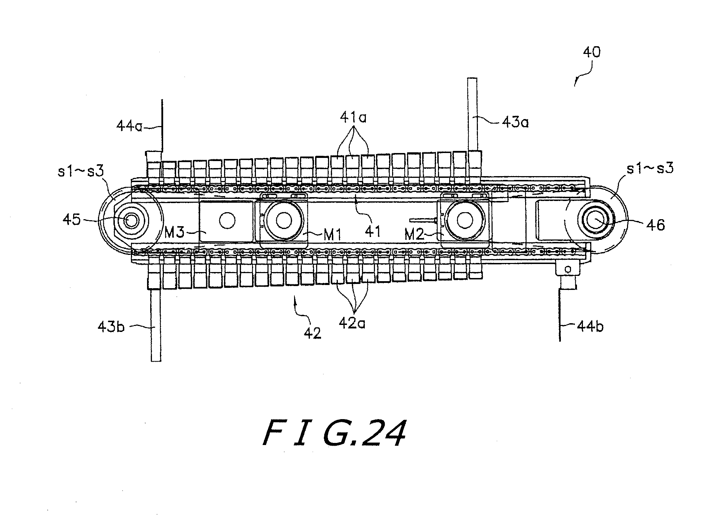

In Figure 24, the buckets 41 and 42 are disposed to the conveying mechanism 40 respectively on the upstream side and the downstream side, and run in a loop along chains wound between sprockets s1 and s1 and between sprockets s2 and s2, which rotate about rotation axes 45 and 46. The buckets 41 and 42 in Figure 21 convey the array of articles ML constituted by a plurality of batches of articles M placed thereon from a predetermined position P on the upstream side to the discharge position R on the downstream side. In addition, the buckets 41 and 42 are formed by combinations of a plurality of bottom plates 41a and 42a, respectively. The bottom plates 41a and 42a form a supporting surface that supports the bottom portion Mb of the article M.

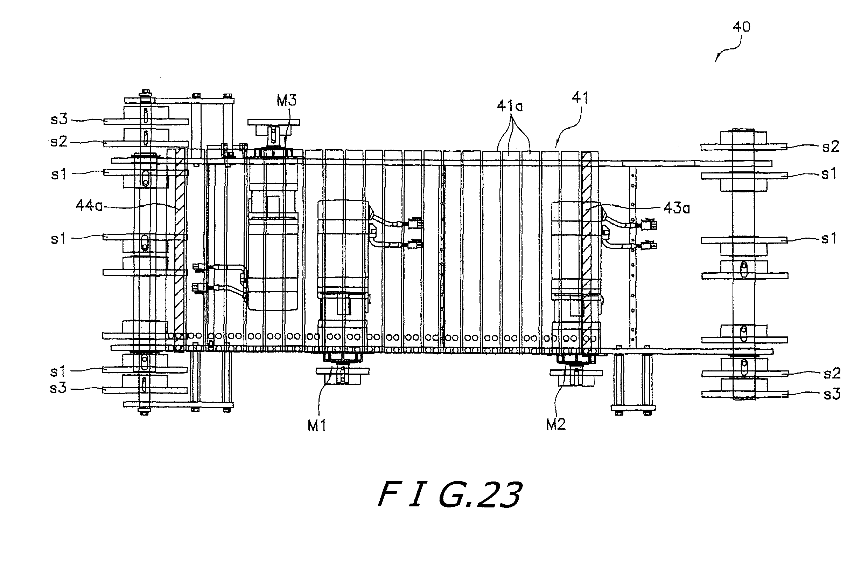

The partition plates 43a and 43b are respectively attached to the bottom plates 41a and 42a disposed on the most downstream side (front side) among the plurality of the bottom plates 41a and 42a. With these partition plates 43a and 43b, the article M at the front of the array of articles ML delivered from the delivery tables 22 can be held in the standing position as is, and at the same time a plurality of articles M that are subsequently delivered can be aligned on each of the buckets 41 and 42. In addition, the partition plates 43a and 43b are independently driven respectively by the drive motors M1 and M2 (Figure 23) (described later) via the sprockets s1 and s2. Further, as shown in Figure 17, the surface of each of the partition plates 43a and 43b that comes into contact with the article M is formed in a comb-teeth shape and configured such that the comb-teeth shapes surface and the above described comb-teeth shaped portion of the delivery table 22 can pass by each other so as to avoid contact with each other.

The back plates 44a and 44b shown in Figure 21 are members that support from behind the array of articles ML placed on each of the buckets 41 and 42. The back plates 44a and 44b are provided to the partition plates 43a and 43b, respectively. In addition, the back plates 44a and 44b are driven by the drive motor M3 (Figure 23) that is their common drive source, and are attached to mutually opposing positions in the moving loop. In this way, the back plates 44a and 44b are driven by the drive source different from the one for the partition plates 43a and 43b. Thereby, even when the number of the predetermined number of articles M to be packed in the box changes, the array of articles ML can be sandwiched between the partition plates 43a and 43b and the array of articles ML can be conveyed to the discharge position R in a stable state. Note that the back plates 44a and 44b are same as the partition plates 43a and 43b in that the surface of each of the back plates 44a and 44b that comes into contact with the articles M is formed in a comb-teeth shape and configured such that the comb-teeth shaped surface and the above described comb-teeth shaped portion of each delivery table 22 can pass by each other so as to avoid contact with each other.

Each of the sprockets s1 to s3 in Figure 23 is disposed at both end portions of the conveying mechanism 40 and they all have the same diameter. Accordingly, the partition plate 43a, the partition plate 43b, and the back plates 44a and 44b can be moved at the same RPM and same speed.

As described above, the present embodiment is configured such that the partition plate 43a, the partition plate 43b, and the back plates 44a and 44b are independently driven. A first loop is formed by the drive motor M1 that drives the partition plate 43a, a second loop is formed by the drive motor M2 that drives the partition plate 43b, and a third loop is formed by the drive motor M3 that drives the back plates 44a and 44b.

Accordingly, by conveying the array of articles ML in a sandwiched manner between the partition plate 43a and the back plate 44a and the array of articles ML in a sandwiched manner between the partition plate 43b and the back plate 44b, the conveying mechanism 40 enables conveyance in a much more stable state compared with the conventional mechanism.

Here, a method of conveying the array of articles ML by the conveying mechanism 40 is specifically described below taking the bucket 41 as an example. Note that the other bucket 42 also performs conveyance in the same manner as described below.

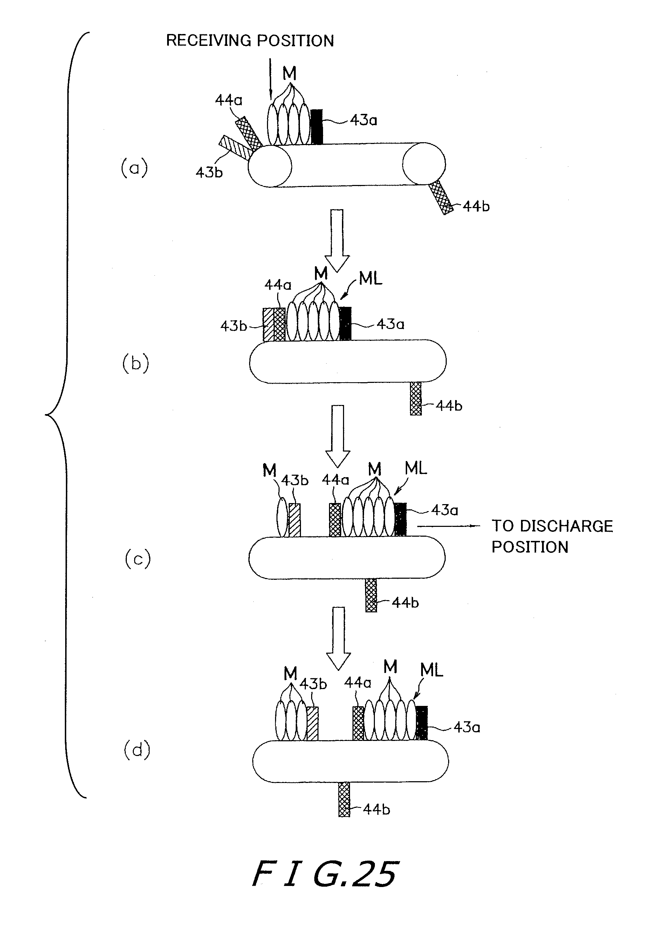

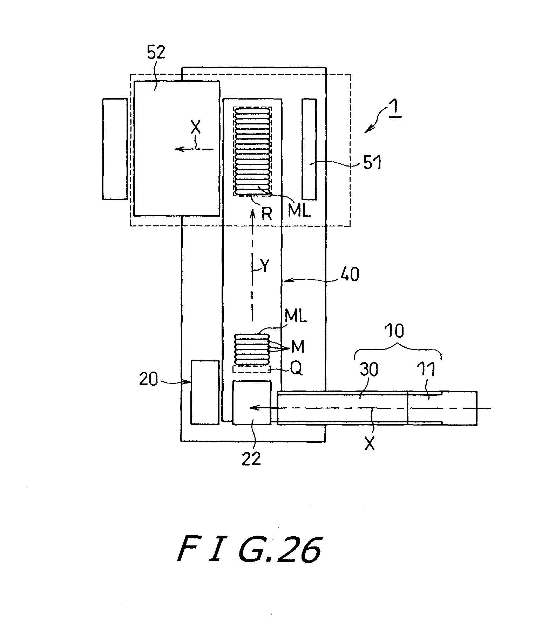

In other words, when the articles M are conveyed from the delivery tables 22 on the upstream side, the bucket 41 in Figure 21 waiting at the predetermined position Q, where the articles M are delivered, receives the first article M in the standing position by the partition plate 43a and keeps the standing position. Then, the bucket 41 moves to the downstream side by a predetermined distance corresponding to a thickness d1 of a bag of the article M (Figure 21), and thereby, as shown in Figure 25(a), a plurality of articles M can be received in an aligned state behind the article M that is received first. At this time, the back plate 44a is waiting on the downstream side of the predetermined position Q (see Figure 26) for receiving the articles M. In addition, the partition plate 43b corresponding to the bucket 42 on the downstream side is waiting on the immediate downstream side of the back plate 44a. Then, when a predetermined number of arrays of articles ML are received as shown in Figure 25(b), the array of articles ML is sandwiched between the partition plate 43a and the back plate 44a as shown in Figure 25(c). Then, in that state, as shown in Figure 25(d), the array of articles ML is conveyed to the discharge position R (see Figure 26) on the downstream side along a second direction Y. At this time, as shown in Figure 25(b), the partition plate 43b that was waiting on the immediate downstream side of the back plate 44a in the second direction Y quickly moves to the downstream side of the back plate 44a and receives the next batch of articles X from the delivery table 22.

### <ARTICLE LINE CONVEYING DEVICE 2>

The array of articles ML aligned for each predetermined number of bags by the alignment device 40 shown in Figure 26 are pushed out onto a lifter 52 by a first pusher 51. As shown in Figure 16, the array of articles ML on the lifter 52 is lifted in a vertically upward direction Z1, and then is pushed out in the first direction X by a second pusher 54. Thereafter, the array of articles ML is conveyed onto a conveying surface 65 of the article line conveying device 2 shown in Figure 15.

Subsequently, an ascending and descending pusher 61 shown by two-dot chain line in Figure 16 pushes the array of articles ML in the first direction X. Here, the conveying surface 65 of the article line conveying device 2 shown in Figure 15 is provided with a guiding plate 80 on each of both sides of the second direction (width direction) Y. When the ascending and descending pusher 61 pushes the array of articles ML, a bar 91 (Figure 16) linearly continuous with the ascending and descending pusher 61 in the second direction Y is held in a standing state. Thereby, the rear end portion of the array of articles ML whose lateral sides Ms are guided by the guiding plates 80 is pushed by the ascending and descending pusher 61 and comes into contact with the bar 91 (Figure 16). Consequently, each of the articles M is aligned in a straight line.

Then, after the above described alignment, the bar 91 (Figure 16) falls down and the array of articles ML is conveyed onto the shutter 62.

Then, after the above described conveyance, the shutter 62 is opened, and the array of articles ML is placed on the ascending and descending table 63 in an ascending state shown by two-dot chain line. Thereafter, the ascending and descending table 63 descends in the vertically downward direction Z2. Meanwhile, a box B that is laid down and arranged such that an opening portion Bu thereof is oriented sideways is set. After the arrays of articles ML are stacked on the ascending and descending table 63, the ascending and descending table 63 descends to a position where the height of the opening portion Bu on the lower side of the box B and the height of the array of articles ML are substantially the same. Then, after the above described descending, the arrays of articles ML are pushed into the box B by the boxing pusher 64.

When box packing in the box B is finished, the box B is turned over such that the opening portion Bu is oriented upward.

Next, the outline of a method of correcting the array of articles ML, which is the main part of the present invention, is described.

### <ALIGNMENT OF ARRAY OF ARTICLES ML>

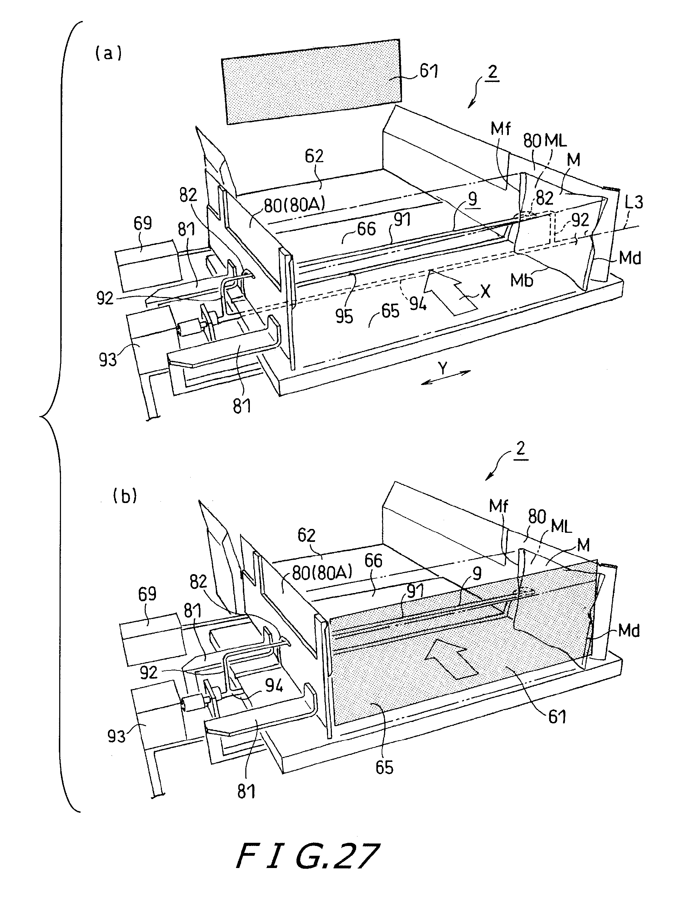

As described above, the array of articles ML on the lifter 52 shown in Figure 16 is lifted in the vertically upward direction Z1, and then a rear end Md of the array of articles ML shown by two-dot chain line in Figure 27(a) is pushed in the first direction (conveying direction) X by the second pusher 54 (Figure 16), and the array of articles ML is conveyed onto the conveying surface 65 of the article line conveying device 2.

As described below, when the array of articles ML is pushed in by the second pusher 54, there is a risk that the position of the leading end of the array of articles ML pushed by the second pusher 54 may be disturbed.

Such disturbance is corrected by the bar 91 provided to a front end Mf of the array of articles ML, and the leading end pushed by the second pusher 54 is aligned.

In other words, when one guiding plate 80 in Figure 27(b) moves in the second direction Y so as to be closer to the other guiding plate 80 and starts gathering together the bags constituting the array of articles ML, the array of articles ML is easily bent backward. However, by causing the array of articles ML to lean against (brought into contact with) the bar 91, the array of articles ML can be prevented from being bent backward and thus can be aligned.

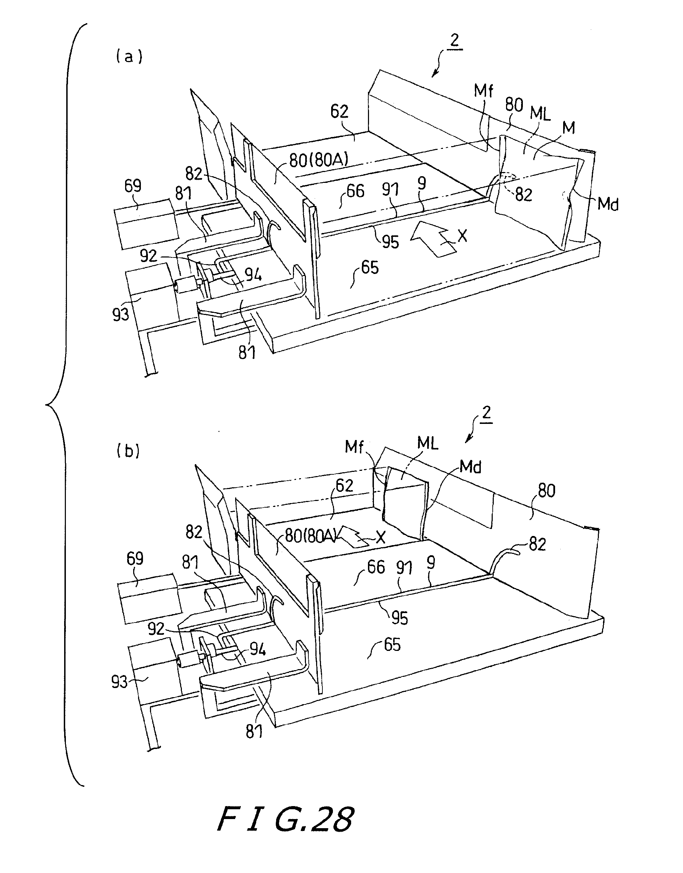

When the bar 91 starts rotating downwardly forward after the bags constituting the array of articles ML are gathered together, the rear end Md of the array of articles ML in Figure 28(a) is pushed by the ascending and descending pusher 61, and as shown in Figure 28(b), the array of articles ML starts to be conveyed forward on the conveying surface 65 while being guided by the guiding plates 80. In this way, the retreat operation of the bar 91 1 and the conveyance of the array of articles ML can be started at the same, so that the acceleration of the conveyance can be achieved. Moreover, the bar 91 can return to the original position at the same time when the array of articles ML passes over the bar 91, so that the bar 91 can start the operation to receive the next array of articles ML while the ascending and descending pusher 61 is moving.

Thereafter, as shown in Figure 27(a), the ascending and descending pusher 61 is moved to a stand-by position above the upper portion of the article M in order to be prepared for the next array of articles ML.

Note that, as shown by the arrow of two-dot chain lines in Figure 16(b), the ascending and descending pusher 61 horizontally moves in the upstream direction from the stand-by position, and then descends to push the rear end of the array of articles ML in the first direction X. Such series of operation is repeated.

### <CORRECTION UNIT 9>

As shown in Figure 27(a), the bar 91 has arms 92 and 92 formed one each on both ends thereof. The arms 92 and 92 are formed by bending the both ends of the bar 91 at a generally right angle. The ends of the arms 92 and 92 are securely fixed to the lateral portion of a rotation axis 94. The rotation axis 94 is provided along a horizontal axis line L3 formed along the second direction Y. One end thereof is provided with a first drive unit 93 that rotates the rotation axis 94 around the horizontal axis line L3.

Consequently, it is possible to rotate the arms 92 at various angles by the rotation of the rotation axis 94.

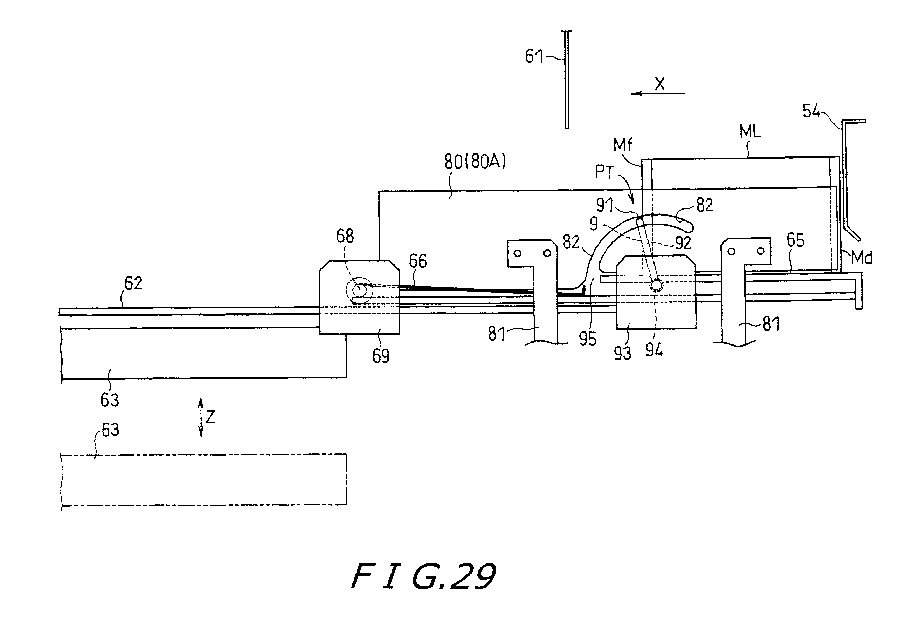

As shown in Figures 29, 30(a), and 31(a), the first drive unit 93 rotates the rotation axis 94 so as to consequently rotate the arms 92 around the horizontal axis line L3, and thereby the bar 91 can be positioned at a contact position PT where the bar 91 comes into contact with the front end Mf of the array of articles ML.

Thus, the bar 91, the arms 92, the first drive unit 93 and the rotation axis 94 constitute the correction unit 9 that prevents some of the articles M from protruding forward from the array of articles ML.

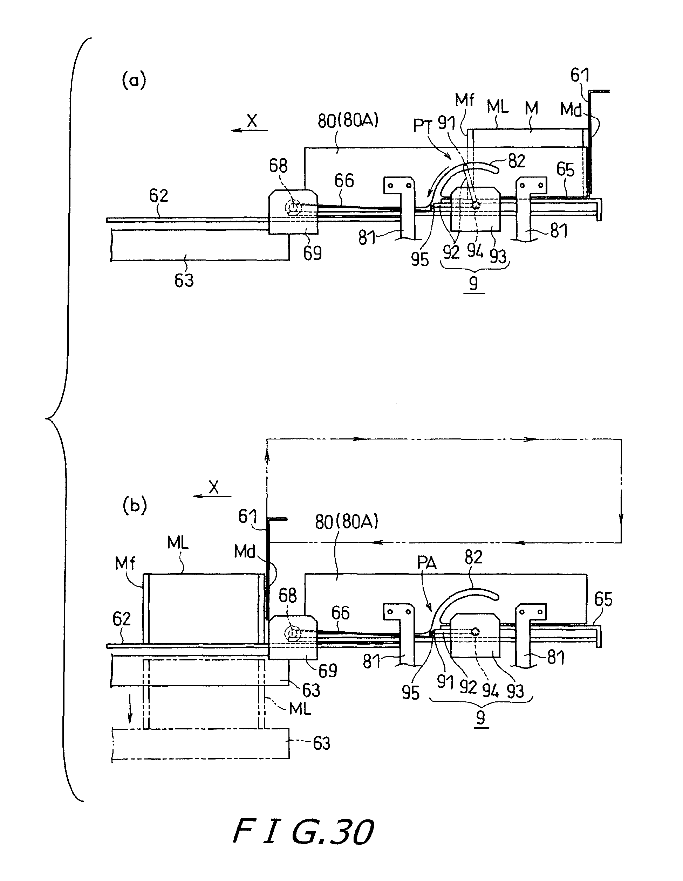

On the other hand, when the first drive unit 93 rotates the rotation axis 94 in a reversed direction, the bar 91 is consequently housed in a housing groove 95 provided on the conveying surface 65. Thereby as shown in Figure 30(b), the bar 91 can be positioned at a retreat position PA where the bar 91 does not disturb the conveyance of the array of articles ML.

The position of the bar 91 at the retreat position PA is set such that the bar 91 is positioned below the conveying surface 65.

### <ANGLE SETTING OF ARMS 92>

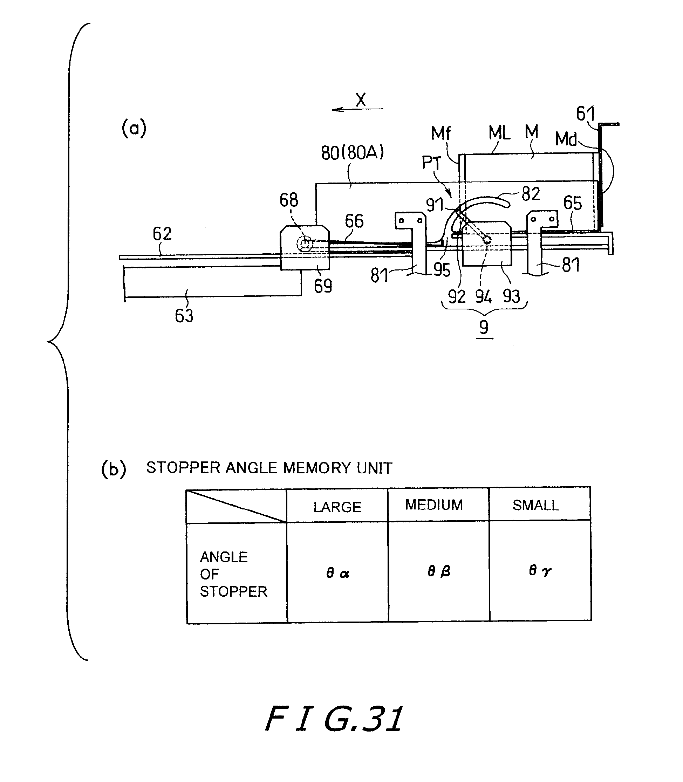

A stepping motor, pulse motor, or the like, for example, is used for the first drive unit 93. By changing the angle of the arms 92 by the rotation of the rotation axis 94 through motor control, the contact position PT of the bar 91 can be set at an arbitrary position. For example, as shown in Figure 30(a), when the article M is small, the arms 92 are rotated in a direction opposite to the first direction X so as to decrease the distance between the ascending and descending pusher 61 and the bar 91. On the other hand, as shown in Figure 31(a), when the article M is large, the arms 92 are rotated in the first direction X so as to increase the distance between the ascending and descending pusher 61 and the bar 91.

The angle of the arms 92 is set in the following manner: angles of a stopper corresponding to each size of the article M are stored in advance in a stop angle memory unit shown in Figure 31 (b), and an angle of the stopper comprising the RPM of the motor according to the size of the article M or the encoder count number is read out from the stop angle memory unit.

### <GUIDING PLATES 80>

As shown in Figures 27(a) to 28(b), each of the guiding plates 80 and 80 has a circular arc slit 82 along the trajectory in which the bar 91 rotates together with the arms 92 and 92 in order to allow the rotation of the bar 91.

As described above, a guiding plate 80A shown in Figure 27, which is one of the guiding plates 80, is movably disposed in the second direction Y (Figure 27(a)) via support portions 81 and 81. A second drive unit (not shown) is connected to the support portions 81 and 81, and the second drive unit can move the guiding plate 80A in the second direction Y (Figure 27(a)) as shown in Figures 27(a) and (b).

Consequently, as shown in Figure 27(b), as the guiding plate 80A moves closer to the other guiding plate 80, the guiding plates 80 come into contact with and push the lateral sides at the both ends of the array of articles ML being conveyed on the conveying surface 65. Thereby, it is possible to narrow the pitch of the articles M of the array of articles ML.

On the other hand, as the ascending and descending pusher 61 descends from above and further pushes the rear end Md of the array of articles ML in the first direction X, the front end Mf of the array of articles ML comes into contact with the bar 91, which prevents some of the articles M from protruding forward from the array of articles ML, thus preventing the array of articles ML from being lost shape and can be conveyed.

### <SHUTTER AND ASCENDING AND DESCENDING TABLE>

As shown by two-dot chain line in Figure 30(b), the ascending and descending table 63 descends to a position where the upper end of the array of articles ML is immediately below the shutter 62. When the next array of articles ML is conveyed onto the shutter 62, the shutter 62 is opened and the next array of articles ML shown by solid line is stacked on the array of articles ML shown by two-dot chain line. The ascending and descending table 63 sequentially repeats the descending movement to the position where the upper end of the array of articles ML is immediately below the shutter 62, according to the number of layers of arrays of articles ML to be stacked. Then, after a predetermined number of layers of arrays of articles ML are stacked, as described above, the ascending and descending table 63 descends to a position where the height of the opening portion Bu on the lower side of the box B and the height of the bottom portion Mb of the array of articles ML on the lowest row are substantially the same.

The shutter 62 is closed when the ascending and descending table 63 descends. After the shutter 62 is closed, the ascending and descending table 63 slightly ascends, and the array of articles ML is compressed between the shutter 62 and the ascending and descending table 63 in an up and down direction. Even when the size of a predetermined number of layers of arrays of articles ML is larger than the size of the box B, the entire size of the stack is compressed by the compression operation and the stacked arrays of articles ML can be pushed in the box B.

### <ROTATION PLATE 66 >

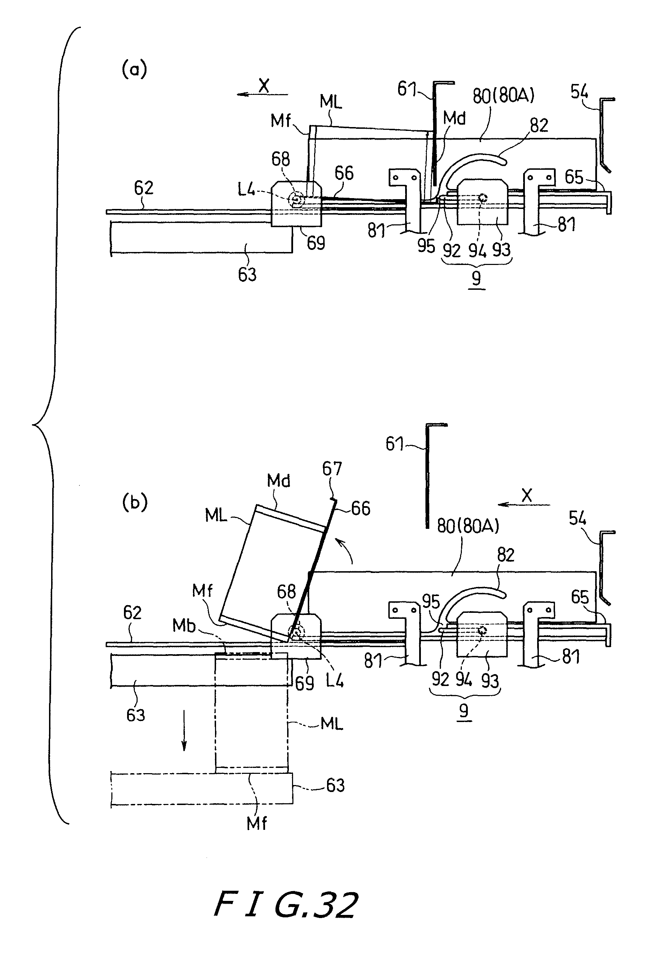

Incidentally, as shown by two-dot chain line in Figure 32(b), there is a case where box packing is performed by changing the position of the array of articles ML such that the front end Mf of the array of articles ML comes into contact with the ascending and descending table 63.

As shown in Figure 32(a), the conveying surface 65 is provided with a rotation plate 66 that constitutes part of the conveying surface 65. The rotation plate 66 has a rotation axis 68 provided at the front end thereof for rotating the rotation plate 66 about a horizontal axis line L4. The rotation axis 68 is connected to a third drive unit 69 (Figure 27(a)).

When the rear end Md of the array of articles ML is pushed by the ascending and descending pusher 61 and conveyed onto the rotation plate 66, the rotation plate 66 is rotated approximately 90 degrees about the rotation axis 68 by the third drive unit 69 in Figure 32(b), and the position of the array of articles ML is changed such that the front end Mf of the article M becomes the lower end.

Note that, in the case of the illustrated example, at the other end of the rotation plate 66, a rear end 67 is inwardly bent in order to prevent the article M from being jumped out by the centrifugal force of the rotation plate 66.

Note that, for angle setting of the arms 92, a brake may be used to stop the arms 92 at a predetermined angle instead of controlling the motor of the first drive unit 93.

In addition, a second bar may be provided on the lifter 52 other than on the conveying surface 65, and the correction unit 9 may first use such second bar to correct the alignment of the array of articles ML.

While preferred embodiments of the present invention have been described as above with reference to the drawings, various changes and modifications may be made by one skilled in the art by referring to the specification without departing from the scope of the invention.

For example, the control of the angle of the arms and, with or without the rotation of the rotation plate may be automatically determined when the type of articles (changing the arrangement) is changed, based on the information on articles M provided on the upstream side and on the size of the bags.

Accordingly, such changes and modifications are understood as falling within the spirit and scope of the invention defined by the appended claims.

### INDUSTRIAL APPLICABILITY

The present invention can provide an effect that products can be delivered to the downstream process in a desired arrangement (accumulated form), and thus the present invention can be widely applied as a conveying device that conveys products to the downstream process, without being limited to the case where a boxing device is disposed on the downstream side.

## Claims

1. A conveying device that receives articles from outside, accumulates the articles so as to form a batch of articles, and conveys the batch, the conveying device comprising:
a delivery unit configured to turn and assume a standing position after receiving the articles in order to raise the articles, and at the same time to deliver the articles to the downstream side at a delivery position;
a placing unit on which the articles delivered from the delivery unit are placed sequentially and configured to form a batch of the articles in which the articles are accumulated;
a control unit configured to change a delivery interval in which the delivery unit sequentially delivers the articles to the placing unit, according to a desired accumulated form.

2. The conveying device according to claim 1, further comprising a conveying unit configured to transfer the placing unit in a conveying direction, wherein
the control unit changes the delivery interval by controlling a conveying distance of the conveying unit.

3. The conveying device according to claim 1 or claim 2, wherein
the control unit changes the delivery interval by controlling the turning speed of the delivery unit.

4. The conveying device according to any one of claim 1 through claim 3, wherein
the delivery interval is equal to or longer than the length of the article in the conveying direction in a state in which the article in the standing position tipped over in the conveying direction.

5. The conveying device according to any one of claim 1 through claim 3, wherein
the delivery interval is shorter than the length of the article in the conveying direction in a state in which the article in the standing position tipped over in the conveying direction.

6. The conveying device according to either claim 4 or claim 5, wherein
the control unit has an adjustment function to adjust the delivery interval in the delivery interval range that is predetermined.

7. The conveying device according to any one of claim 1 through claim 6, wherein
an angle of the delivery unit at the delivery position with respect to the horizontal direction is approximately 90 degrees.

8. A boxing device, comprising:
the conveying device according to any one of claim 1 through claim 7, and
a packing unit configured to transfer the article conveyed from the conveying device into the box.

9. A boxing system that packs a plurality of articles in a box, with each article being constituted by contents in a bag including a pair of lateral sides and a bottom portion continuous with the lateral sides, the boxing system comprising:
a conveying surface configured to support from below a bottom of an array of articles in which the plurality of articles are linearly arranged such that the lateral sides of the plurality of article are in contact with one another;
a pusher configured to push forward a rear end adjacent to the lateral side of the array of articles and thereby convey the array of articles on the conveying surface;
a pair of guiding plates configured to guide the array of articles by coming into contact with the lateral sides at both ends of the array of articles in a width direction orthogonal to the conveying direction, the array of articles being conveyed on the conveying surface; and
a correction unit configured to prevent some of the articles from protruding forward from the array of articles,
wherein
the correction unit includes
a bar capable of coming into contact with a front end of the array of articles opposite from the rear end,
a pair of arms continuous with an end of the bar and rotates around the horizontal axis line, and
a first drive unit for driving and rotating the arms such that the arms move between a contact position where the bar comes into contact with the front end of the array of articles and a retreat position where the bar does not interfere with the conveyance of the array of articles.

10. The boxing system according to claim 9, further comprising a support portion that supports at least one of the guiding plates in a freely movable manner in the width direction such that the distance between the pair of guiding plates changes, and a second drive unit that moves the guiding plates in the width direction.

11. The boxing system according to claim 10, wherein
each guiding plate has a circular arc slit formed thereon in order to allow the bar to rotate along the trajectory in which the bar rotates with the arms.

12. The boxing system according to any one of claim 9 through claim 11, wherein
the position of the bar at the retreat position is below the conveying surface.

13. The boxing system according to any one of claim 9 through claim 12, wherein
the contact position of the bar can be set to an arbitrary position.

14. The boxing system according to any one of claim 9 through claim 13, wherein
a portion of the conveying surface is provided rotatably around a horizontal axis line so as to form a rotation plate, and the rotation plate rotates the array of articles 90 degrees around the horizontal axis so as to change the position such that the front end of the array of articles becomes a lower end.

15. A boxing system that packs a plurality of articles in a box, with each article being constituted by contents in a bag including a pair of lateral sides and a bottom portion continuous with the lateral sides, the boxing system comprising:
a conveying surface configured to support from below a bottom of an array of articles in which the plurality of articles are linearly arranged such that the lateral sides of the plurality of article are in contact with one another;
a pusher configured to push forward a rear end adjacent to the lateral side of the array of articles and thereby convey the array of articles on the conveying surface;
a pair of guiding plates configured to guide the array of articles by coming into contact with the lateral sides at both ends of the array of articles in a width direction orthogonal to the conveying direction, the array of articles being conveyed on the conveying surface; and
a rotation plate formed as a result of a portion of the conveying surface being provided rotatably around a horizontal axis line, and configured to rotate the array of articles 90 degrees around the horizontal axis so as to change the position such that a front end of the array of articles becomes a lower end.

16. The boxing system according to claim 14 or claim 15, further comprising a shutter provided downstream of the rotation plate and configured to support from below the array of articles and to cause the array of article being supported to drop downward as the shutter is opened.

17. The boxing system according to claim 16, wherein
an ascending and descending table that receives the array of articles that is dropped when the shutter is opened is provided below the shutter, and after receiving the array of articles, the ascending and descending table descends by the height corresponding to the height of the array of articles.
